# EUROPEAN PATENT APPLICATION

(11) **EP 4 773 707 A1**
(43) Date of publication of application: **08.07.2026**
(21) Application number: 24870752.3
(22) Date of filing: 25.09.2024
(51) Int. Cl.: H04W 72/542

(54) **CELL MEASUREMENT METHOD AND COMMUNICATION APPARATUS**

(30) Priority: 27.09.2023 CN 202311287409
(71) Applicant: HUAWEI TECHNOLOGIES CO., LTD., Shenzhen 518129 (CN)
(72) Inventor: XUE, Yifan, Shenzhen, Guangdong 518129 (CN); MADIER, Louis, Shenzhen, Guangdong 518129 (CN); TIE, Xiaolei, Shenzhen, Guangdong 518129 (CN); KUANG, Yiru, Shenzhen, Guangdong 518129 (CN)
(74) Representative: Grünecker Patent- und Rechtsanwälte PartG mbB
(86) International application number: PCT/CN2024/120970
(87) International publication number: WO 2025/067208

(57) **Abstract**

This application provides a cell measurement method and a communication apparatus. The method may include: A terminal device measures a serving cell by using a wake-up circuit; and when the terminal device has not measured a neighbor cell, the terminal device starts, based on cell quality of the serving cell and a first threshold, to measure the neighbor cell by using a main circuit; or when the terminal device has measured the neighbor cell, the terminal device stops, based on the cell quality of the serving cell and a second threshold, measuring the neighbor cell by using the main circuit, where the first threshold and the second threshold are different. In this manner, after the wake-up circuit is introduced, the terminal device may determine, by using two thresholds, for example, the first threshold and the second threshold, whether to measure the neighbor cell by using the main circuit, so that cell measurement performance can be improved. In addition, in some scenarios, an operation of turning on the main circuit to perform cell measurement may be further reduced, thereby improving a power gain of the wake-up circuit for the terminal device.

## Description

This application claims priority to Chinese Patent Application No. 202311287409.1, filed with the China National Intellectual Property Administration on September 27, 2023 and entitled "CELL MEASUREMENT METHOD AND COMMUNICATION APPARATUS", which is incorporated herein by reference in its entirety.

### TECHNICAL FIELD

This application relates to the field of wireless communication, and more specifically, to a cell measurement method and a communication apparatus.

### BACKGROUND

A terminal device may receive a wake-up signal by using a separate low-power small circuit, for example, a wake-up receiver (wake-up receiver, WUR), and a main receiver may be in a deep sleep state. After the terminal device detects the wake-up signal by using the WUR, the terminal device triggers wake-up of the main receiver. After the main receiver is woken up, the terminal device may perform data transmission by using the main receiver. In some scenarios, the terminal device needs to measure a cell, such as a serving cell or a neighbor cell. After the WUR is introduced, how the terminal device measures the cell is a problem to be considered.

### SUMMARY

This application provides a cell measurement method and a communication apparatus, to improve cell measurement performance.

According to a first aspect, a cell measurement method is provided, and the method may be performed by a communication apparatus. The communication apparatus may be a device (for example, a terminal device), or may be a component (for example, a chip, a chip system, or a circuit) of the device. This is not limited in this application.

The method may include: measuring a serving cell; and when a neighbor cell is not being measured, starting to measure the neighbor cell based on cell quality of the serving cell and a first threshold; or when the neighbor cell is being measured, stopping measuring the neighbor cell based on the cell quality of the serving cell and a second threshold, where the first threshold and the second threshold are different.

Based on the foregoing technical solution, two thresholds (that is, the first threshold and the second threshold) are designed to determine whether to start to measure the neighbor cell or whether to stop measuring the neighbor cell. Specifically, when the communication apparatus (for example, the terminal device or the component of the terminal device) has not measured the neighbor cell, for example, when the communication apparatus moves from a cell center to a cell edge, the communication apparatus may compare the first threshold with the cell quality of the serving cell, and determine, based on a comparison result, whether to start to measure the neighbor cell. In this way, the communication apparatus can perform a serving cell measurement in a larger range, thereby reducing power consumption caused by the cell measurement and achieving an energy saving effect. When the communication apparatus (for example, the terminal device or the component of the terminal device) has measured the neighbor cell, for example, when the communication apparatus moves from the cell edge to the cell center, the communication apparatus may compare the second threshold with the cell quality of the serving cell, and determine, based on a comparison result, whether to stop measuring the neighbor cell. In this way, impact of interference/noise on a measurement result can be reduced, and a ping-pong effect can be avoided.

With reference to the first aspect, in some implementations of the first aspect, the starting to measure the neighbor cell based on the cell quality of the serving cell and the first threshold includes: starting to measure the neighbor cell when the cell quality of the serving cell is less than or equal to the first threshold; and/or the stopping measuring the neighbor cell based on the cell quality of the serving cell and the second threshold includes: stopping measuring the neighbor cell when the cell quality of the serving cell is greater than or equal to the second threshold.

Based on the foregoing technical solution, when the communication apparatus has not measured the neighbor cell, the communication apparatus starts to measure the neighbor cell when the cell quality of the serving cell is less than or equal to the first threshold; or otherwise, the communication apparatus does not measure the neighbor cell. In this way, the communication apparatus can perform a serving cell measurement in a larger range, thereby achieving an energy saving effect. When the communication apparatus has measured the neighbor cell, the communication apparatus stops measuring the neighbor cell only when the cell quality of the serving cell is greater than or equal to the second threshold; or otherwise, the communication apparatus continues to measure the neighbor cell. In this way, impact of interference/noise on a measurement result can be reduced, and a ping-pong effect can be avoided.

With reference to the first aspect, in some implementations of the first aspect, starting to measure the neighbor cell when the cell quality of the serving cell is less than or equal to the first threshold includes: when the cell quality of the serving cell is less than or equal to the first threshold in a first time period, starting to measure the neighbor cell after the first time period; and/or stopping measuring the neighbor cell when the cell quality of the serving cell is greater than or equal to the second threshold includes: when the cell quality of the serving cell is greater than or equal to the second threshold in a second time period, stopping measuring the neighbor cell after the second time period.

Based on the foregoing technical solution, cell quality in a period of time may be compared with a threshold (for example, the first threshold or the second threshold). Compared with a manner of performing comparison based only on cell quality at a moment, this manner can reduce impact caused by a random error.

With reference to the first aspect, in some implementations of the first aspect, the method further includes: receiving first configuration information, where the first configuration information indicates the first time period and/or the second time period; or the first time period and/or the second time period are/is predefined.

With reference to the first aspect, in some implementations of the first aspect, the first threshold is less than the second threshold.

Based on the foregoing technical solution, the first threshold is less than the second threshold. In this way, the communication apparatus can perform a serving cell measurement in a larger range, thereby reducing power consumption.

With reference to the first aspect, in some implementations of the first aspect, the method further includes: receiving second configuration information, where the second configuration information indicates the first threshold and/or the second threshold.

With reference to the first aspect, in some implementations of the first aspect, measuring the serving cell includes: receiving a first reference signal, and determining the cell quality of the serving cell based on the first reference signal.

Based on the foregoing technical solution, the cell quality of the serving cell may be obtained by measuring the first reference signal.

With reference to the first aspect, in some implementations of the first aspect, the first reference signal is a low-power synchronization signal LP-SS.

With reference to the first aspect, in some implementations of the first aspect, a modulation scheme of the first reference signal is on-off keying OOK or frequency shift keying FSK.

With reference to the first aspect, in some implementations of the first aspect, the cell quality of the serving cell is one or more of the following: reference signal received power, reference signal received quality, and a signal to interference plus noise ratio.

With reference to the first aspect, in some implementations of the first aspect, measuring the neighbor cell includes: receiving a second reference signal, and determining cell quality of the neighbor cell based on the second reference signal.

Based on the foregoing technical solution, the cell quality of the neighbor cell may be obtained by measuring the second reference signal.

With reference to the first aspect, in some implementations of the first aspect, the second reference signal is a synchronization signal block SSB.

With reference to the first aspect, in some implementations of the first aspect, the cell quality of the neighbor cell is one or more of the following: secondary synchronization signal-reference signal received power SS-RSRP and secondary synchronization signal-reference signal received quality SS-RSRQ.

With reference to the first aspect, in some implementations of the first aspect, the method further includes: when a wake-up signal is monitored, monitoring a paging message based on the cell quality of the serving cell and a third threshold; or when the paging message is monitored, monitoring the wake-up signal based on the cell quality of the serving cell and a fourth threshold, where the wake-up signal is used to wake up at least one terminal device, and the third threshold and the fourth threshold are different.

For example, monitoring the wake-up signal may alternatively be replaced with: measuring the serving cell by using a wake-up module.

For example, monitoring the paging message may alternatively be replaced with: measuring the serving cell by using a main module.

Based on the foregoing technical solution, two thresholds (that is, the first threshold and the second threshold) are designed to determine whether to monitor the paging message or the wake-up signal, or which module is used to perform a serving cell measurement. Specifically, when the communication apparatus (for example, the terminal device or the component of the terminal device) monitors the wake-up signal, for example, when the communication apparatus moves from a cell center to a cell edge, the communication apparatus may compare the third threshold with the cell quality of the serving cell, and determine, based on a comparison result, whether to start to monitor the paging message. In this way, the communication apparatus can monitor a signal in a larger range by using the wake-up module, for example, perform a serving cell measurement by using the wake-up module, thereby reducing power consumption caused by the cell measurement and achieving an energy saving effect. When the communication apparatus (for example, the terminal device or the component of the terminal device) monitors the paging message, for example, when the communication apparatus moves from the cell edge to the cell center, the communication apparatus may compare the second threshold with the cell quality of the serving cell, and determine, based on a comparison result, whether to monitor the wake-up signal. In this way, impact of interference/noise on a measurement result can be reduced, and a ping-pong effect can be avoided.

With reference to the first aspect, in some implementations of the first aspect, the monitoring the paging message based on the cell quality of the serving cell and the third threshold includes: monitoring the paging message when the cell quality of the serving cell is less than or equal to the third threshold; and/or the monitoring the wake-up signal based on the cell quality of the serving cell and the fourth threshold includes: monitoring the wake-up signal when the cell quality of the serving cell is greater than or equal to the fourth threshold.

Based on the foregoing technical solution, when the communication apparatus monitors the wake-up signal, the communication apparatus starts to monitor the paging message when the cell quality of the serving cell is less than or equal to the third threshold; or otherwise, the communication apparatus does not monitor the paging message. In this way, the communication apparatus can monitor a signal in a larger range by using the wake-up module, for example, perform a serving cell measurement by using the wake-up module, thereby achieving an energy saving effect. When the communication apparatus monitors the paging message, the communication apparatus monitors the wake-up signal only when the cell quality of the serving cell is greater than or equal to the fourth threshold; or otherwise, the communication apparatus does not monitor the wake-up signal. In this way, impact of interference/noise on a measurement result can be reduced, and a ping-pong effect can be avoided.

With reference to the first aspect, in some implementations of the first aspect, the monitoring the paging message when the cell quality of the serving cell is less than or equal to the third threshold includes: when the cell quality of the serving cell is less than or equal to the third threshold, monitoring the paging message, and stopping monitoring the wake-up signal; and/or the monitoring the wake-up signal when the cell quality of the serving cell is greater than or equal to the fourth threshold includes: when the cell quality of the serving cell is greater than or equal to the fourth threshold, monitoring the wake-up signal, and stopping monitoring the paging message.

Based on the foregoing technical solution, cell quality in a period of time may be compared with a threshold (for example, the third threshold or the fourth threshold). Compared with a manner of performing comparison based only on cell quality at a moment, this manner can reduce impact caused by a random error.

With reference to the first aspect, in some implementations of the first aspect, the monitoring the paging message when the cell quality of the serving cell is less than or equal to the third threshold includes: when the cell quality of the serving cell is less than or equal to the third threshold in a third time period, monitoring the paging message after the third time period; and/or the monitoring the wake-up signal when the cell quality of the serving cell is greater than or equal to the fourth threshold includes: when the cell quality of the serving cell is greater than or equal to the fourth threshold in a fourth time period, monitoring the wake-up signal after the fourth time period.

With reference to the first aspect, in some implementations of the first aspect, the method further includes: receiving third configuration information, where the third configuration information indicates the third time period and/or the fourth time period; or the third time period and/or the fourth time period are/is predefined.

With reference to the first aspect, in some implementations of the first aspect, the third threshold is less than the fourth threshold.

Based on the foregoing technical solution, the third threshold is less than the fourth threshold. In this way, the communication apparatus can monitor a signal in a larger range by using the wake-up module, for example, perform a serving cell measurement by using the wake-up module, thereby reducing power consumption.

With reference to the first aspect, in some implementations of the first aspect, the method further includes: receiving fourth configuration information, where the fourth configuration information indicates the third threshold and/or the fourth threshold.

With reference to the first aspect, in some implementations of the first aspect, the method further includes: receiving a third reference signal; and the monitoring the paging message when the cell quality of the serving cell is less than or equal to the third threshold includes: monitoring the paging message when the cell quality of the serving cell that is determined based on the third reference signal is less than or equal to the third threshold.

Based on the foregoing technical solution, when the wake-up signal is monitored, the cell quality of the serving cell may be obtained by measuring the third reference signal.

With reference to the first aspect, in some implementations of the first aspect, the third reference signal is an LP-SS.

With reference to the first aspect, in some implementations of the first aspect, a modulation scheme of the third reference signal is OOK or FSK.

With reference to the first aspect, in some implementations of the first aspect, the cell quality of the serving cell is one or more of the following: reference signal received power, reference signal received quality, and a signal to interference plus noise ratio.

With reference to the first aspect, in some implementations of the first aspect, the method further includes: receiving a fourth reference signal; and the monitoring the wake-up signal when the cell quality of the serving cell is greater than or equal to the fourth threshold includes: monitoring the wake-up signal when the cell quality of the serving cell that is determined based on the fourth reference signal is greater than or equal to the fourth threshold.

Based on the foregoing technical solution, when the paging message is monitored, the cell quality of the serving cell may be obtained by measuring the fourth reference signal.

With reference to the first aspect, in some implementations of the first aspect, the fourth reference signal is an SSB.

With reference to the first aspect, in some implementations of the first aspect, the cell quality of the serving cell is one or more of the following: SS-RSRP and SS-RSRQ.

With reference to the first aspect, in some implementations of the first aspect, the communication apparatus includes a main module and a wake-up module, where measurement on the serving cell is performed by using the wake-up module, and measurement on the neighbor cell is performed by using the main module.

With reference to the first aspect, in some implementations of the first aspect, the method further includes: monitoring a wake-up signal by using the wake-up module, where the wake-up signal is used to wake up at least one terminal device.

With reference to the first aspect, in some implementations of the first aspect, the method further includes: accessing a network device by using the main module.

With reference to the first aspect, in some implementations of the first aspect, the communication apparatus includes a main module and a wake-up module; monitoring the wake-up signal includes: The communication apparatus monitors the wake-up signal by using the wake-up module; and monitoring the paging message includes: The communication apparatus monitors the paging message by using the main module.

With reference to the first aspect, in some implementations of the first aspect, the communication apparatus includes a main module and a wake-up module; and when the wake-up signal is monitored, the communication apparatus performs cell measurement by using the wake-up module; or when the communication apparatus monitors the paging message, the communication apparatus performs cell measurement by using the main module.

With reference to the first aspect, in some implementations of the first aspect, that the communication apparatus performs the cell measurement by using the wake-up module includes: The communication apparatus measures the serving cell by using the wake-up module; and/or that the communication apparatus performs the cell measurement by using the main module includes: The communication apparatus measures the serving cell and/or the neighbor cell by using the main module.

According to a second aspect, a cell measurement method is provided, and the method may be performed by a communication apparatus. The communication apparatus may be a device (for example, a network device), or may be a component (for example, a chip, a chip system, or a circuit) of the device. This is not limited in this application.

The method may include: sending second configuration information, where the second configuration information indicates a first threshold and/or a second threshold, the first threshold is used to start to measure a neighbor cell with reference to cell quality of a serving cell when the neighbor cell is not being measured, and the second threshold is used to stop measuring the neighbor cell with reference to the cell quality of the serving cell when the neighbor cell is being measured, where the first threshold and the second threshold are different.

With reference to the second aspect, in some implementations of the second aspect, the method further includes: sending first configuration information, where the first configuration information indicates a first time period and/or a second time period, the first threshold is used to start to measure the neighbor cell with reference to the cell quality of the serving cell in the first time period when the neighbor cell is not being measured, and the second threshold is used to stop measuring the neighbor cell with reference to the cell quality of the serving cell in the second time period when the neighbor cell is being measured.

With reference to the second aspect, in some implementations of the second aspect, the first threshold is less than the second threshold.

According to a third aspect, a cell measurement method is provided, and the method may be performed by a communication apparatus. The communication apparatus may be a device (for example, a network device), or may be a component (for example, a chip, a chip system, or a circuit) of the device. This is not limited in this application.

The method may include: measuring a serving cell; and when a wake-up signal is monitored, monitoring a paging message based on cell quality of the serving cell and a third threshold; or when the paging message is monitored, monitoring the wake-up signal based on the cell quality of the serving cell and a fourth threshold, where the wake-up signal is used to wake up at least one terminal device, and the third threshold and the fourth threshold are different.

For example, monitoring the wake-up signal may alternatively be replaced with: measuring the serving cell by using a wake-up module.

For example, monitoring the paging message may alternatively be replaced with: measuring the serving cell by using a main module.

Based on the foregoing technical solution, two thresholds (that is, the first threshold and the second threshold) are designed to determine whether to monitor the paging message or the wake-up signal, or which module is used to perform a serving cell measurement. Specifically, when the communication apparatus (for example, the terminal device or the component of the terminal device) monitors the wake-up signal, for example, when the communication apparatus moves from a cell center to a cell edge, the communication apparatus may compare the third threshold with the cell quality of the serving cell, and determine, based on a comparison result, whether to start to monitor the paging message. In this way, the communication apparatus can monitor a signal in a larger range by using the wake-up module, for example, perform a serving cell measurement by using the wake-up module, thereby reducing power consumption caused by the cell measurement and achieving an energy saving effect. When the communication apparatus (for example, the terminal device or the component of the terminal device) monitors the paging message, for example, when the communication apparatus moves from the cell edge to the cell center, the communication apparatus may compare the second threshold with the cell quality of the serving cell, and determine, based on a comparison result, whether to monitor the wake-up signal. In this way, impact of interference/noise on a measurement result can be reduced, and a ping-pong effect can be avoided.

With reference to the third aspect, in some implementations of the third aspect, the monitoring the paging message based on the cell quality of the serving cell and the third threshold includes: monitoring the paging message when the cell quality of the serving cell is less than or equal to the third threshold; and/or the monitoring the wake-up signal based on the cell quality of the serving cell and the fourth threshold includes: monitoring the wake-up signal when the cell quality of the serving cell is greater than or equal to the fourth threshold.

With reference to the third aspect, in some implementations of the third aspect, the monitoring the paging message when the cell quality of the serving cell is less than or equal to the third threshold includes: when the cell quality of the serving cell is less than or equal to the third threshold, monitoring the paging message, and stopping monitoring the wake-up signal; and/or the monitoring the wake-up signal when the cell quality of the serving cell is greater than or equal to the fourth threshold includes: when the cell quality of the serving cell is greater than or equal to the fourth threshold, monitoring the wake-up signal, and stopping monitoring the paging message.

With reference to the third aspect, in some implementations of the third aspect, the monitoring the paging message when the cell quality of the serving cell is less than or equal to the third threshold includes: when the cell quality of the serving cell is less than or equal to the third threshold in a third time period, monitoring the paging message after the third time period; and/or the monitoring the wake-up signal when the cell quality of the serving cell is greater than or equal to the fourth threshold includes: when the cell quality of the serving cell is greater than or equal to the fourth threshold in a fourth time period, monitoring the wake-up signal after the fourth time period.

With reference to the third aspect, in some implementations of the third aspect, the method further includes: receiving third configuration information, where the third configuration information indicates the third time period and/or the fourth time period; or the third time period and/or the fourth time period are/is predefined.

With reference to the third aspect, in some implementations of the third aspect, the third threshold is less than the fourth threshold.

With reference to the third aspect, in some implementations of the third aspect, the method further includes: receiving fourth configuration information, where the fourth configuration information indicates the third threshold and/or the fourth threshold.

With reference to the third aspect, in some implementations of the third aspect, the method further includes: receiving a third reference signal; and the monitoring the paging message when the cell quality of the serving cell is less than or equal to the third threshold includes: monitoring the paging message when the cell quality of the serving cell that is determined based on the third reference signal is less than or equal to the third threshold.

With reference to the third aspect, in some implementations of the third aspect, the third reference signal is a low-power synchronization signal LP-SS.

With reference to the third aspect, in some implementations of the third aspect, a modulation scheme of the third reference signal is on-off keying OOK or frequency shift keying FSK.

With reference to the third aspect, in some implementations of the third aspect, the cell quality of the serving cell is one or more of the following: reference signal received power, reference signal received quality, and a signal to interference plus noise ratio.

With reference to the third aspect, in some implementations of the third aspect, the method further includes: receiving a fourth reference signal; and the monitoring the wake-up signal when the cell quality of the serving cell is greater than or equal to the fourth threshold includes: monitoring the wake-up signal when the cell quality of the serving cell that is determined based on the fourth reference signal is greater than or equal to the fourth threshold.

With reference to the third aspect, in some implementations of the third aspect, the fourth reference signal is a synchronization signal block SSB.

With reference to the third aspect, in some implementations of the third aspect, the cell quality of the serving cell is one or more of the following: secondary synchronization signal-reference signal received power SS-RSRP and secondary synchronization signal-reference signal received quality SS-RSRQ.

With reference to the third aspect, in some implementations of the third aspect, the method further includes: when a neighbor cell is not being measured, starting to measure the neighbor cell based on cell quality of the serving cell and a first threshold; or when the neighbor cell is being measured, stopping measuring the neighbor cell based on the cell quality of the serving cell and a second threshold, where the first threshold and the second threshold are different.

With reference to the third aspect, in some implementations of the third aspect, the starting to measure the neighbor cell based on the cell quality of the serving cell and the first threshold includes: starting to measure the neighbor cell when the cell quality of the serving cell is less than or equal to the first threshold; and/or the stopping measuring the neighbor cell based on the cell quality of the serving cell and the second threshold includes: stopping measuring the neighbor cell when the cell quality of the serving cell is greater than or equal to the second threshold.

With reference to the third aspect, in some implementations of the third aspect, starting to measure the neighbor cell when the cell quality of the serving cell is less than or equal to the first threshold includes: when the cell quality of the serving cell is less than or equal to the first threshold in a first time period, starting to measure the neighbor cell after the first time period; and/or stopping measuring the neighbor cell when the cell quality of the serving cell is greater than or equal to the second threshold includes: when the cell quality of the serving cell is greater than or equal to the second threshold in a second time period, stopping measuring the neighbor cell after the second time period.

With reference to the third aspect, in some implementations of the third aspect, the method further includes: receiving first configuration information, where the first configuration information indicates the first time period and/or the second time period; or the first time period and/or the second time period are/is predefined.

With reference to the third aspect, in some implementations of the third aspect, the first threshold is less than the second threshold.

With reference to the third aspect, in some implementations of the third aspect, the method further includes: receiving second configuration information, where the second configuration information indicates the first threshold and/or the second threshold.

With reference to the third aspect, in some implementations of the third aspect, measuring the serving cell includes: receiving a first reference signal, and determining the cell quality of the serving cell based on the first reference signal.

With reference to the third aspect, in some implementations of the third aspect, the first reference signal is an LP-SS.

With reference to the third aspect, in some implementations of the third aspect, a modulation scheme of the first reference signal is OOK or FSK.

With reference to the third aspect, in some implementations of the third aspect, the cell quality of the serving cell is one or more of the following: reference signal received power, reference signal received quality, and a signal to interference plus noise ratio.

With reference to the third aspect, in some implementations of the third aspect, measuring the neighbor cell includes: receiving a second reference signal, and determining cell quality of the neighbor cell based on the second reference signal.

With reference to the third aspect, in some implementations of the third aspect, the second reference signal is an SSB.

With reference to the third aspect, in some implementations of the third aspect, the cell quality of the neighbor cell is one or more of the following: SS-RSRP and SS-RSRQ.

With reference to the third aspect, in some implementations of the third aspect, the communication apparatus includes a main module and a wake-up module, where measurement on the serving cell is performed by using the wake-up module, and measurement on the neighbor cell is performed by using the main module.

With reference to the third aspect, in some implementations of the third aspect, the method further includes: monitoring a wake-up signal by using the wake-up module, where the wake-up signal is used to wake up at least one terminal device.

With reference to the third aspect, in some implementations of the third aspect, the method further includes: accessing the network device by using the main module.

With reference to the third aspect, in some implementations of the third aspect, the communication apparatus includes a main module and a wake-up module; monitoring the wake-up signal includes: The communication apparatus monitors the wake-up signal by using the wake-up module; and monitoring the paging message includes: The communication apparatus monitors the paging message by using the main module.

With reference to the third aspect, in some implementations of the third aspect, the communication apparatus includes a main module and a wake-up module; and when the wake-up signal is monitored, the communication apparatus performs cell measurement by using the wake-up module; or when the communication apparatus monitors the paging message, the communication apparatus performs cell measurement by using the main module.

With reference to the third aspect, in some implementations of the third aspect, that the communication apparatus performs the cell measurement by using the wake-up module includes: The communication apparatus measures the serving cell by using the wake-up module; and/or that the communication apparatus performs the cell measurement by using the main module includes: The communication apparatus measures the serving cell and/or the neighbor cell by using the main module.

According to a fourth aspect, a cell measurement method is provided, and the method may be performed by a communication apparatus. The communication apparatus may be a device (for example, a network device), or may be a component (for example, a chip, a chip system, or a circuit) of the device. This is not limited in this application.

The method may include: sending fourth configuration information, where the fourth configuration information indicates a third threshold and/or a fourth threshold, the third threshold is used to monitor a paging message with reference to cell quality of a serving cell when a wake-up signal is monitored, and the fourth threshold is used to monitor the wake-up signal with reference to the cell quality of the serving cell when the paging message is monitored, where the wake-up signal is used to wake up at least one terminal device, and the third threshold and the fourth threshold are different.

With reference to the fourth aspect, in some implementations of the fourth aspect, the method further includes: sending third configuration information, where the third configuration information indicates a third time period and/or a fourth time period, the third threshold is used to monitor the paging message with reference to the cell quality of the serving cell in the third time period when the wake-up signal is monitored, and the fourth threshold is used to monitor the wake-up signal with reference to the cell quality of the serving cell in the fourth time period when the paging message is monitored.

With reference to the fourth aspect, in some implementations of the fourth aspect, the third threshold is less than the fourth threshold.

For beneficial effects of the second aspect to the fourth aspect and the possible designs thereof, refer to the related descriptions of the first aspect. Details are not described herein again.

According to a fifth aspect, a cell measurement method is provided, and the method may be performed by a communication apparatus. The communication apparatus may be a device (for example, a network device), or may be a component (for example, a chip, a chip system, or a circuit) of the device. This is not limited in this application.

The method may include: when first measurement is performed on a serving cell, performing second measurement on the serving cell based on cell quality of the serving cell and a fifth threshold; or when second measurement is performed on the serving cell, monitoring a wake-up signal based on the cell quality of the serving cell and a sixth threshold, where the wake-up signal is used to wake up at least one terminal device, and the fifth threshold and the sixth threshold are different.

For example, performing first measurement on the serving cell may alternatively be replaced with: performing measurement on the serving cell by using a main module.

For example, performing second measurement on the serving cell may alternatively be replaced with: performing measurement on the serving cell by using a wake-up module.

Based on the foregoing technical solution, two thresholds (that is, the first threshold and the second threshold) are designed to determine whether to perform second measurement on the serving cell or whether to monitor the wake-up signal. Specifically, when the communication apparatus (for example, the terminal device or the component of the terminal device) performs first measurement on the serving cell, the communication apparatus may compare the fifth threshold with the cell quality of the serving cell, and determine, based on a comparison result, whether to start to perform second measurement on the serving cell. When the communication apparatus (for example, the terminal device or the component of the terminal device) performs second measurement on the serving cell, the communication apparatus may compare the sixth threshold with the cell quality of the serving cell, and determine, based on a comparison result, whether to start to monitor the wake-up signal. In this way, a result is more accurate than that of directly determining, based on a threshold, whether to monitor the wake-up signal.

With reference to the fifth aspect, in some implementations of the fifth aspect, the performing second measurement on the serving cell based on the cell quality of the serving cell and the fifth threshold includes: performing second measurement on the serving cell when the cell quality of the serving cell is greater than or equal to the fifth threshold.

With reference to the fifth aspect, in some implementations of the fifth aspect, the performing second measurement on the serving cell when the cell quality of the serving cell is greater than or equal to the fifth threshold includes: when the cell quality of the serving cell is greater than or equal to the fifth threshold in a fifth time period, performing second measurement on the serving cell after the fifth time period.

Based on the foregoing technical solution, cell quality in a period of time may be compared with the fifth threshold. Compared with a manner of performing comparison based only on cell quality at a moment, this manner can reduce impact caused by a random error.

With reference to the fifth aspect, in some implementations of the fifth aspect, the monitoring the wake-up signal based on the cell quality of the serving cell and the sixth threshold includes: monitoring the wake-up signal when the cell quality of the serving cell is greater than or equal to the sixth threshold.

With reference to the fifth aspect, in some implementations of the fifth aspect, the monitoring the wake-up signal when the cell quality of the serving cell is greater than or equal to the sixth threshold includes: when the cell quality of the serving cell is greater than or equal to the sixth threshold in a sixth time period, monitoring the wake-up signal after the sixth time period.

Based on the foregoing technical solution, cell quality in a period of time may be compared with the sixth threshold. Compared with a manner of performing comparison based only on cell quality at a moment, this manner can reduce impact caused by a random error.

With reference to the fifth aspect, in some implementations of the fifth aspect, the method further includes: receiving fifth configuration information, where the fifth configuration information indicates the fifth time period and/or the sixth time period; or the fifth time period and/or the sixth time period are/is predefined.

With reference to the fifth aspect, in some implementations of the fifth aspect, the method further includes: stopping performing first measurement on the serving cell.

With reference to the fifth aspect, in some implementations of the fifth aspect, the method further includes: receiving sixth configuration information, where the sixth configuration information indicates the fifth threshold and/or the sixth threshold.

With reference to the fifth aspect, in some implementations of the fifth aspect, performing first measurement on the serving cell includes: receiving a fifth reference signal, and determining the cell quality of the serving cell based on the fifth reference signal.

Based on the foregoing technical solution, when first measurement is performed on the serving cell, the cell quality of the serving cell may be obtained by measuring the fifth reference signal.

With reference to the fifth aspect, in some implementations of the fifth aspect, the fifth reference signal is a synchronization signal block SSB.

With reference to the fifth aspect, in some implementations of the fifth aspect, the cell quality of the serving cell is one or more of the following: secondary synchronization signal-reference signal received power SS-RSRP and secondary synchronization signal-reference signal received quality SS-RSRQ.

With reference to the fifth aspect, in some implementations of the fifth aspect, performing second measurement on the serving cell includes: receiving a sixth reference signal, and determining the cell quality of the serving cell based on the sixth reference signal.

Based on the foregoing technical solution, when second measurement is performed on the serving cell, the cell quality of the serving cell may be obtained by measuring the sixth reference signal.

With reference to the fifth aspect, in some implementations of the fifth aspect, the sixth reference signal is a low-power synchronization signal LP-SS.

With reference to the fifth aspect, in some implementations of the fifth aspect, a modulation scheme of the sixth reference signal is on-off keying OOK or frequency shift keying FSK.

With reference to the fifth aspect, in some implementations of the fifth aspect, the cell quality of the serving cell is one or more of the following: reference signal received power, reference signal received quality, and a signal to interference plus noise ratio.

With reference to the fifth aspect, in some implementations of the fifth aspect, the communication apparatus includes a main module and a wake-up module; performing first measurement on the serving cell includes: The communication apparatus performs measurement on the serving cell by using the main module; and performing second measurement on the serving cell includes: The communication apparatus performs measurement on the serving cell by using the wake-up module.

With reference to the fifth aspect, in some implementations of the fifth aspect, the communication apparatus includes a main module and a wake-up module; and monitoring the wake-up signal includes: The communication apparatus monitors the wake-up signal by using the wake-up module.

With reference to the fifth aspect, in some implementations of the fifth aspect, the method further includes: The communication apparatus accesses the network device by using the main module.

According to a sixth aspect, a cell measurement method is provided, and the method may be performed by a communication apparatus. The communication apparatus may be a device (for example, a network device), or may be a component (for example, a chip, a chip system, or a circuit) of the device. This is not limited in this application.

The method may include: sending sixth configuration information, where the sixth configuration information indicates a fifth threshold and/or a sixth threshold, the fifth threshold is used to perform second measurement on a serving cell with reference to cell quality of the serving cell when first measurement is performed on the serving cell, and the sixth threshold is used to monitor a wake-up signal with reference to the cell quality of the serving cell when second measurement is performed on the serving cell, where the wake-up signal is used to wake up at least one terminal device, and the fifth threshold and the sixth threshold are different.

With reference to the sixth aspect, in some implementations of the sixth aspect, the method further includes: sending fifth configuration information, where the fifth configuration information indicates a fifth time period and/or a sixth time period, the fifth threshold is used to perform second measurement on the serving cell with reference to the cell quality of the serving cell in the fifth time period when first measurement is performed on the serving cell, and the sixth threshold is used to monitor the wake-up signal with reference to the cell quality of the serving cell in the sixth time period when second measurement is performed on the serving cell.

For beneficial effects of the sixth aspect and the possible designs thereof, refer to the related descriptions of the fifth aspect. Details are not described herein again.

According to a seventh aspect, a communication apparatus is provided. The apparatus is configured to perform the method according to any one of the first aspect to the sixth aspect. Specifically, the apparatus may include a unit and/or a module, for example, a processing unit and/or a communication unit, configured to perform the method according to any implementation of any one of the first aspect to the sixth aspect.

In an implementation, the apparatus is a communication device (for example, a terminal device or a network device). When the apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the communication device. When the apparatus is the chip, the chip system, or the circuit used in the device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to an eighth aspect, a communication apparatus is provided. The apparatus includes at least one processor, configured to perform the method according to any implementation of any one of the first aspect to the sixth aspect. Optionally, the apparatus further includes a memory, configured to store a program; and correspondingly, the at least one processor is configured to execute the computer program or instructions stored in the memory.

In an implementation, the apparatus is a communication device (for example, a terminal device or a network device).

In another implementation, the apparatus is a chip, a chip system, or a circuit used in the communication device.

According to a ninth aspect, this application provides a processor, configured to perform the methods according to the foregoing aspects.

Operations such as sending and obtaining/receiving related to the processor may be understood as operations such as outputting and inputting of the processor or sending and receiving operations performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable medium stores program code to be executed by a device, and the program code is used to perform the method according to any implementation of any one of the first aspect to the sixth aspect.

According to an eleventh aspect, a computer program product including instructions is provided. When the computer program product is run on a computer, the computer is enabled to perform the method according to any implementation of any one of the first aspect to the sixth aspect.

According to a twelfth aspect, a chip is provided. The chip includes a processor and a communication interface. The processor reads, through the communication interface, instructions stored in a memory, to perform the method according to any implementation of any one of the first aspect to the sixth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to any implementation of any one of the first aspect to the sixth aspect.

According to a thirteenth aspect, a communication system is provided. The communication system includes a first communication apparatus and a second communication apparatus. The first communication apparatus is configured to perform the method provided in any implementation of the first aspect, and the second communication apparatus is configured to perform the method provided in any implementation of the second aspect; or the first communication apparatus is configured to perform the method provided in any implementation of the third aspect, and the second communication apparatus is configured to perform the method provided in any implementation of the fourth aspect; or the first communication apparatus is configured to perform the method provided in any implementation of the fifth aspect, and the second communication apparatus is configured to perform the method provided in any implementation of the sixth aspect.

### BRIEF DESCRIPTION OF DRAWINGS

FIG. 1 is a diagram of a wireless communication system 100 applicable to an embodiment of this application;
FIG. 2 is a diagram of a main circuit and a wake-up circuit;
FIG. 3 is a diagram of a waveform of a signal when OOK modulation is used;
FIG. 4 is a diagram of a waveform of a signal after the signal passes through a channel;
FIG. 5 is a diagram of a waveform of a signal after Manchester encoding is used;
FIG. 6 is another diagram of a waveform of a signal after Manchester encoding is used;
FIG. 7 is a diagram of a waveform of a signal after FSK modulation is used;
FIG. 8 is a diagram of a cell measurement method 800 according to an embodiment of this application;
FIG. 9 is a diagram of cell measurement applicable to an embodiment of this application;
FIG. 10 is a diagram of measurement performed by a wake-up circuit in different signal-to-noise ratios;
FIG. 11 is a diagram of a cell measurement method 1100 according to another embodiment of this application;
FIG. 12 is a diagram of cell measurement applicable to another embodiment of this application;
FIG. 13 is a diagram of cell measurement applicable to another embodiment of this application;
FIG. 14 is a diagram of a cell measurement method 1400 according to another embodiment of this application;
FIG. 15 is a diagram of cell measurement applicable to another embodiment of this application;
FIG. 16 is a block diagram of a communication apparatus 1600 according to an embodiment of this application;
FIG. 17 is a diagram of another communication apparatus 1700 according to an embodiment of this application; and
FIG. 18 is a diagram of a chip system 1800 according to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th Generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), and an internet of things (internet of things, IoT) communication system. The technical solutions provided in this application may be further applied to a non-terrestrial network (non-terrestrial network, NTN) system such as an inter-satellite communication system and a satellite communication system.

For example, the satellite communication system includes a satellite base station and a terminal device. The satellite base station provides a communication service for the terminal device. The satellite base station may also communicate with a base station. A satellite may be used as a base station, or may be used as a terminal device. The satellite may be an uncrewed aerial vehicle, a hot air balloon, a low Earth orbit satellite, a medium Earth orbit satellite, a high Earth orbit satellite, or the like. The satellite may alternatively be a non-terrestrial base station, a non-terrestrial device, or the like.

For example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication.

A device in the communication system may send a signal to another device or receive a signal from another device. The signal may include information, signaling, data, or the like. The device may alternatively be replaced with an entity, a network entity, a communication device, a communication module, a node, a communication node, or the like. In this disclosure, the device is used as an example for description.

The terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device having a wireless connection function or a vehicle-mounted device. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile network (public land mobile network, PLMN), or the like. This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal device may be a terminal device, or may be an apparatus that can support the terminal device in implementing the function, for example, a chip system or a chip. The apparatus may be mounted in the terminal device. In embodiments of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. In embodiments of this application, the network device may be a radio access network (radio access network, RAN) node (or device) that connects the terminal device to a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master station, a secondary station, a multi-standard radio (motor slide retainer, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), or a positioning node. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a mobile switching center, a device that performs a base station function in D2D, V2X, and M2M communication, a network side device in a 6G network, a device that performs a base station function in a future communication system, or the like. The base station may support networks using a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a location of the mobile base station. In other examples, a helicopter or an uncrewed aerial vehicle may be configured as a device that communicates with another base station.

In some deployments, the network device mentioned in embodiments of this application may be a device including a CU, or a DU, or a CU and a DU, or a device including a CU-control plane (central unit-control plane (central unit-control plane, CU-CP)) node, a CU-user plane (central unit-user plane (central unit-user plane, CU-UP)) node, and a DU node.

The network device and the terminal device may be deployed on land, including an indoor or outdoor device, a handheld device, or a vehicle-mounted device; may be deployed on the water; or may be deployed on an aircraft, a balloon, and a satellite in the air. A scenario in which the network device and the terminal device are located is not limited in embodiments of this application.

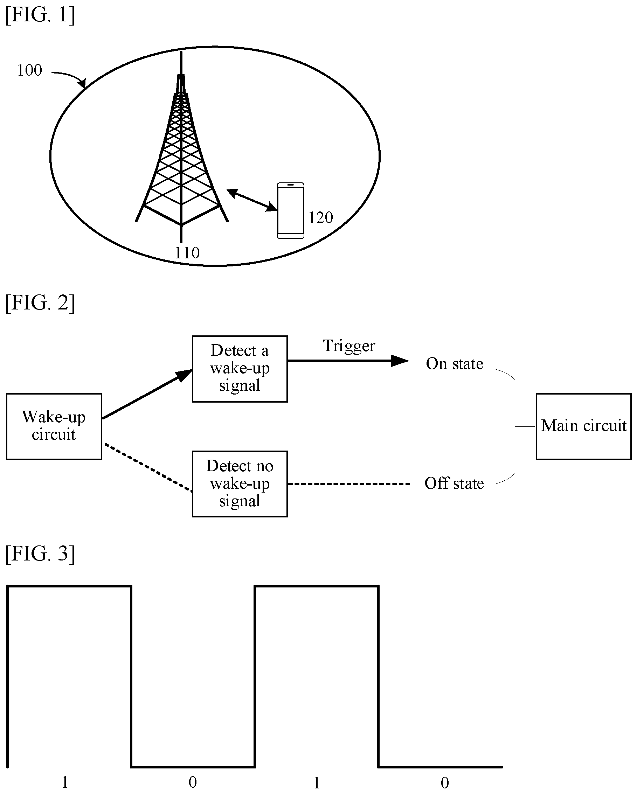

First, a communication system applicable to embodiments of this application is briefly described with reference to FIG. 1. Details are as follows:

For example, FIG. 1 is a diagram of a wireless communication system 100 applicable to an embodiment of this application. As shown in FIG. 1, the wireless communication system 100 may include at least one network device, for example, a network device 110 shown in FIG. 1. The wireless communication system 100 may further include at least one terminal device, for example, a terminal device 120 shown in FIG. 1. For example, the network device and the terminal device each may be configured with a plurality of antennas, and the network device and the terminal device may communicate with each other by using a multi-antenna technology.

When the network device communicates with the terminal device, the network device may manage one or more cells, and one cell may include at least one terminal device. Optionally, the network device 110 and the terminal device 120 form a single-cell communication system. It is assumed that a cell is denoted as a cell #1. The network device 110 may be a network device in the cell #1, or the network device 110 may serve a terminal device (for example, the terminal device 120) in the cell #1.

It should be noted that the cell may be understood as an area within coverage of a radio signal of the network device.

It should be understood that FIG. 1 is merely a simplified diagram of an example for ease of understanding. The wireless communication system 100 may further include another network device or another terminal device that is not shown in FIG. 1.

For ease of understanding of embodiments of this application, terms in this application are briefly described.

### 1. Paging (paging)

When a terminal device is in an idle (idle) state or an inactive (inactive) state, the terminal device may periodically receive paging. For example, a procedure of receiving paging by the terminal device includes the following steps:
(1) The terminal device may obtain, through calculation, a paging frame (paging frame, PF) and a location of a paging occasion (paging occasion, PO) in the PF based on an identifier (identifier, ID) of the terminal device (UE ID).
(2) The terminal device monitors a physical downlink control channel (physical downlink control channel, PDCCH) (or may be referred to as a paging PDCCH or the like) in the PO. The PDCCH includes downlink control information (downlink control information, DCI) (or may be referred to as paging DCI or the like).
(3) If the terminal device detects the PDCCH, the terminal device receives a physical downlink shared channel (physical downlink shared channel, PDSCH) (or may be referred to as a paging PDSCH or the like) at a location scheduled by the PDCCH. The paging PDSCH includes a paging message (paging message), and the paging message may indicate which terminal devices are paged. For example, the paging PDSCH includes a maximum of 32 paging records (paging record), each paging record may include one UE ID, and the UE ID indicates which UE is paged.

The foregoing descriptions of the paging are merely examples for description, and do not constitute a limitation on the protection scope of embodiments of this application.

2. A wake-up circuit, or referred to as a wake-up receiver (wake-up receiver, WUR), a low-power wake-up receiver (low-power wake-up receiver, LP-WUR), or a wake-up module, may be understood as a separate low-power small circuit, for example, a circuit used by a terminal device in an idle state. The low-power small circuit may be implemented by a separate small circuit or chip with a simple structure, and has low power consumption. It may be understood that the wake-up circuit is merely named for differentiation, and a specific name thereof does not constitute a limitation on the protection scope of this application. For example, without loss of generality, the wake-up circuit may alternatively be described as a first circuit (or a first module). The wake-up circuit is uniformly used for description below.

A signal received by the terminal device by using the wake-up circuit may be referred to as being transmitted on a wake-up link. The wake-up link represents a connection relationship between the terminal device and a network device, and is a logical concept rather than a physical entity. It may be understood that the wake-up link is merely named for differentiation, and a specific name thereof does not constitute a limitation on the protection scope of this application. For example, without loss of generality, the wake-up link may alternatively be described as a first link. The wake-up link is uniformly used for description below.

The signal received by the terminal device by using the wake-up circuit may be referred to as a wake-up signal (wake-up signal/radio, WUS/WUR) or a low-power wake-up signal (low-power wake-up signal, LP-WUS). It may be understood that the wake-up signal is merely named for differentiation, and a specific name thereof does not constitute a limitation on the protection scope of this application. For example, without loss of generality, the wake-up signal may alternatively be referred to as a signal. The wake-up signal is uniformly used for description below.

3. A main circuit, or referred to as a main receiver (main receiver, MR) or a main module, may be understood as a circuit used when a terminal device transmits data normally, or a circuit used when the terminal device transmits data in a connected state. When the terminal device transmits data by using the main circuit, power consumption is high. It may be understood that the main circuit is merely named for differentiation, and a specific name thereof does not constitute a limitation on the protection scope of this application. For example, without loss of generality, the main circuit may alternatively be described as a second circuit (or a second module). The main circuit is uniformly used for description below.

A signal received by the terminal device by using the main circuit may be referred to as being transmitted on a main link. The main link represents a connection relationship between the terminal device and a network device, and is a logical concept rather than a physical entity. It may be understood that the main link is merely named for differentiation, and a specific name thereof does not constitute a limitation on the protection scope of this application. For example, without loss of generality, the main link may alternatively be described as a second link. The main link is uniformly used for description below.

In the following, for differentiation, a signal transmitted by the terminal device by using the main circuit is denoted as a data signal.

For example, FIG. 2 is a diagram of a main circuit and a wake-up circuit.

As shown in FIG. 2, a terminal device may receive (or detect) a wake-up signal by using the wake-up circuit, and the terminal device may receive a data signal by using the main circuit. It is assumed that the terminal device receives the wake-up signal by using the wake-up circuit. If the terminal device does not detect the wake-up signal, the terminal device continues to receive the wake-up signal by using the wake-up circuit, and the main circuit may be in an off state (or a sleep state). If the terminal device detects the wake-up signal, the terminal device triggers wake-up of the main circuit, that is, enables the main circuit to be in/be switched to an on state (or referred to as a working state or an active state). After the main circuit is turned on, the terminal device may transmit the data signal by using the main circuit.

4. On-off keying (on-off keying, OOK) modulation is used to modulate information depending on whether a signal is sent, and a corresponding wake-up circuit may receive the signal by using an envelope detection method. In an OOK modulation technology, demodulation can be implemented by a receiver with extremely low complexity, so that low power consumption of the wake-up circuit can be implemented. To ensure a power gain, the OOK modulation may be used for a wake-up signal. It may be understood that another modulation scheme, for example, frequency shift keying (frequency shift keying, FSK) modulation, may alternatively be used for the wake-up signal. This is not limited.

When the OOK modulation is used for a signal, each bit (namely, an encoded bit) may correspond to one symbol (symbol). Equivalently, one symbol may alternatively be referred to as one chip (chip) or another name. This is not limited.

For example, when the bit (bit) is "1", a signal is sent in a length of the symbol (that is, a signal transmit power in the length of the symbol is not 0); or when the bit is "0", no signal is sent in the length of the symbol (that is, the signal transmit power in the length of the symbol is 0). Alternatively, it may be understood that, in the OOK modulation, if energy is sent, it indicates that the bit is "1"; or if no energy is sent, it indicates that the bit is "0".

For another example, when the bit is "0", a signal is sent in a length of the symbol (that is, a signal transmit power in the length of the symbol is not 0); or when the bit is "1", no signal is sent in the length of the symbol (that is, the signal transmit power in the length of the symbol is 0). Alternatively, it may be understood that, in the OOK modulation, if energy is sent, it indicates that the bit is "0"; or if no energy is sent, it indicates that the bit is "1".

For ease of description, the following mainly uses an example in which when the bit is "1", a signal is sent in the length of the symbol; or when the bit is "0", no signal is sent in the length of the symbol for description.

In addition, for ease of description, if a signal is sent in a symbol, the signal is denoted as an ON signal; or if no signal is sent in a symbol, the signal is denoted as an OFF signal. For example, when the bit is "1", a signal is sent in a length of the symbol; or when the bit is "0", no signal is sent in the length of the symbol. The ON signal indicates that the information bit is "1", and the OFF signal indicates that the information bit is "0".

In addition, an OOK symbol mentioned below indicates a symbol obtained through OOK modulation. The OOK symbol may be, for example, an ON signal or an OFF signal. For example, if the information bit is "1", the OOK symbol obtained through OOK modulation is an ON signal; or if the information bit is "0", the OOK symbol obtained through OOK modulation is an OFF signal. The OOK symbol may alternatively be referred to as an OOK signal. For uniformity, the OOK symbol is used for description below.

For example, FIG. 3 is a diagram of a waveform of a signal when OOK modulation is used.

For example, it is assumed that, when a bit is "1", a signal is sent in a length of an OOK symbol; or when the bit is "0", no signal is sent in the length of the OOK symbol. Therefore, the waveform shown in FIG. 3 may indicate four bits "0100". To be specific, the 1^{st} bit is an OFF signal, the 2^{nd} bit is an ON signal, and the 3^{rd} bit and the 4^{th} bit are both OFF signals. As shown in FIG. 3, a communication system generally uses a specific frequency (frequency) for sending, and a sent signal needs to be modulated on a carrier. At a receive end, the receive end detects an envelope (or energy) of a received signal, and determines whether the OOK symbol corresponds to the bit "0" or the bit "1", so as to complete demodulation.

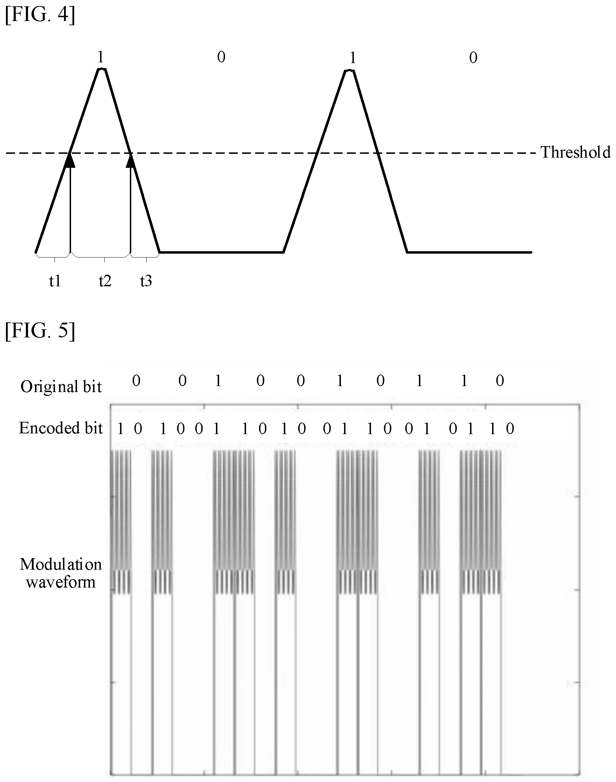

After the signal passes through a channel, distortion may occur due to impact of a channel state and the like. The OOK modulation waveform shown in FIG. 3 is used as an example. The waveform shown in FIG. 3 may become a waveform shown in FIG. 4 at the receive end.

For example, FIG. 4 is a diagram of a waveform of a signal after the signal passes through a channel. To determine whether the signal corresponds to a bit "0" or a bit "1", a terminal device may compare a level value of the received signal with a threshold (the threshold is shown by a dashed line in FIG. 4). For example, if the level value of the signal received by the terminal device is greater than the threshold, it indicates that the signal corresponds to the bit "1". If the level value of the signal received by the terminal device is less than the threshold, it indicates that the signal corresponds to the bit "0". However, it is difficult to set the threshold. For example, if an inappropriate threshold is selected, a demodulation error may be caused. To resolve this problem, a possible manner is to use Manchester encoding.

5. Manchester encoding is bi-phase encoding, where a bit "0" or a bit "1" may be indicated through level conversion. For example, through Manchester encoding, an original bit "0" may be encoded as a bit "10", and an original bit "1" may be encoded as a bit "01". For differentiation, bits obtained by encoding the original bits, for example, the bits "10" and "01", may be referred to as encoded bits. When sending a signal, a transmit end may use two OOK symbols to send 1-bit original information. If the original bit "0" is encoded as the bit "10", and the original bit "1" is encoded as the bit "01", the original bit "0" corresponds to one ON signal followed by one OFF signal, and the original bit "1" corresponds to one OFF signal followed by one ON signal. When demodulating a signal after the Manchester encoding, a receive end may compare relative values of signal power (or signal amplitude) in two adjacent OOK symbols. If signal power (or signal amplitude) in the former OOK symbol is greater than signal power (or signal amplitude) in the latter OOK symbol, a received information bit is considered as "0"; or otherwise, the received information bit is considered as "1". This manner avoids using an absolute threshold for determining.

It may be understood that the foregoing uses the example in which the original bit "0" is encoded as the bit "10", and the original bit "1" is encoded as the bit "01" for description. This is not limited. For example, the original bit "0" is encoded as the bit "01", and the original bit "1" is encoded as the bit "10".

For example, a signal may be generated based on an orthogonal frequency division multiplexing (orthogonal frequency division multiplexing, OFDM) transmitter, or a signal may be modulated through an OFDM transmitter.

In a possible manner, one OOK symbol is transmitted in a length of one OFDM symbol. In other words, one OOK symbol occupies one OFDM symbol. For example, if an ON signal needs to be sent in a length of one OOK symbol, the transmit end may send a specific signal, and make a contour of the signal in the length of the OOK symbol like a square wave as much as possible. If an OFF signal needs to be sent in a length of one OOK symbol, the transmit end may be disabled for a time of the length of the OOK symbol.

For example, FIG. 5 is a diagram of a waveform of a signal after Manchester encoding is used. As shown in FIG. 5, original bits are "0 0 1 0 0 1 0 1 1 0". It is assumed that the original bit "0" is encoded as "10", and the original bit "1" is encoded as "01". In this case, encoded bits after the Manchester encoding is used are "10 10 01 10 10 01 10 01 01 10", and a waveform is shown in FIG. 5. A time length corresponding to each encoded bit may be considered as a length of one OFDM symbol. In other words, one OOK symbol is transmitted in a length of one OFDM symbol, or one OOK symbol occupies one OFDM symbol. When demodulating the signal, the receive end may compare relative values of signal power (or signal amplitude) in two adjacent OOK symbols, and determine demodulated information bits based on a comparison result.

In another possible manner, at least two OOK symbols are transmitted in a length of one OFDM symbol. In other words, at least two OOK symbols occupy one OFDM symbol.

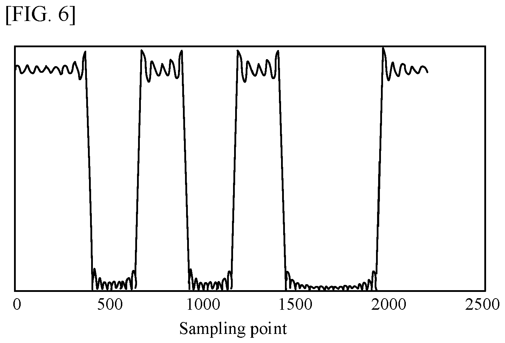

For example, FIG. 6 is another diagram of a waveform of a signal after Manchester encoding is used. As shown in FIG. 6, original bits are "0 0 0 1". It is assumed that the original bit "0" is encoded as "10", and the original bit "1" is encoded as "01". In this case, encoded bits after the Manchester encoding are "10 10 10 10 01", and a waveform is shown in FIG. 6. In a length of one OFDM symbol (2192 sampling points in FIG. 6), eight OOK symbols are sent: an ON signal, an OFF signal, an ON signal, an OFF signal, an ON signal, an OFF signal, an OFF signal, and an ON signal. When demodulating the signal, the receive end may compare relative values of signal power (or signal amplitude) in two adjacent OOK symbols, and determine demodulated information bits based on a comparison result.

It may be understood that, in embodiments of this application, one OOK symbol may be transmitted in a length of one OFDM symbol, or at least two OOK symbols may be transmitted in a length of one OFDM symbol. This is not limited. In addition, regardless of whether one OOK symbol or at least two OOK symbols are transmitted in a length of one OFDM symbol, encoding is not limited to the Manchester encoding.

6. Frequency shift keying (frequency shift keying, FSK) modulation is a modulation technology for modulating information on a carrier frequency.

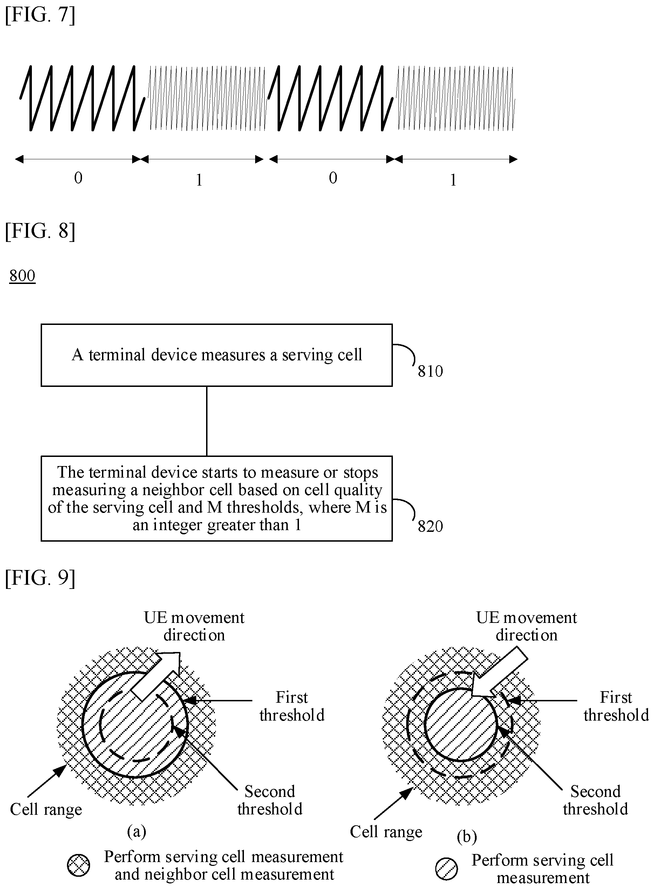

For example, FIG. 7 is a diagram of a waveform of a signal after FSK modulation is used. As shown in FIG. 7, when the FSK modulation is used for a wake-up signal, different frequency resources are used for different information. For example, 2FSK carries 1-bit information; and when the information bit is 0, information is sent on a frequency resource f₀, and no information is sent on a frequency resource f₁; or when the information bit is 1, information is sent on the frequency resource f₁, and no information is sent on the frequency resource f₀. It is assumed that f₀<f₁, and a waveform of an FSK signal with information 0101 is shown in FIG. 7. In the 1^{st} symbol and the 3^{rd} symbol, the signal has a lower frequency, and in the 2^{nd} symbol and the 4^{th} symbol, the signal has a higher frequency. When demodulating the signal, a receive end may compare power of f₀ and f₁ to determine whether the sent information is 0 or 1.

It may be understood that the foregoing is an example for description, and this is not limited. In addition, the FSK may further support a higher modulation order to carry more information. For example, 4FSK may carry 2-bit information; and when the information bit is 00, information may be sent on a frequency resource f₀, and no information is sent on frequency resources fi, f₂, and f₃; when the information bit is 01, information may be sent on the frequency resource f₁, and no information is sent on the frequency resources f₀, f₂, and f₃; when the information bit is 10, information may be sent on the frequency resource f₂, and no information is sent on the frequency resources f₀, fi, and f₃; or when the information bit is 11, information may be sent on the frequency resource f₃, and no information is sent on the frequency resources f₀, f₁, and f₂. Similarly, the receive end may compare power on a plurality of frequency resources to determine transmitted information.

### 7. Wake-up signal and paging message

The wake-up signal indicates a signal received by a terminal device by using a wake-up circuit. For example, the wake-up signal may be used to wake up at least one terminal device. For example, the wake-up signal may indicate paging-related information, and the paging-related information may include, for example, whether one terminal device or one group of terminal devices are paged.

Specific content of the wake-up signal is not limited in embodiments of this application. In embodiments of this application, the wake-up signal represents a type of signal, that is, a signal transmitted on a wake-up link, and is limited to a wake-up signal for a terminal device.

The paging message may indicate which terminal devices are paged. For example, the terminal device receives the paging message by using a main circuit. For example, the paging message may include a paging PDSCH (paging PDSCH) and a paging PDCCH (paging PDCCH).

8. Radio resource management (radio resource management, RRM) measurement: When a terminal device is in an idle state or an inactive state, the terminal device may perform RRM measurement (RRM measurement) by receiving a synchronization signal block (synchronization signal block, SSB). The SSB may include two parts: a synchronization signal (synchronization signal, SS) and a physical broadcast channel (physical broadcast channel block, PBCH). The SS may include a primary synchronization signal (primary synchronization signal, PSS) and a secondary synchronization signal (secondary synchronization signal, SSS). Therefore, it may also be considered that the SSB includes three parts. In other words, the SSB includes the PSS, the SSS, and the PBCH. This is not limited.

For example, the RRM measurement (or may be referred to as cell measurement) includes serving cell (serving cell) measurement and neighbor cell (neighbor cell) measurement. For example, the neighbor cell measurement includes: intra-frequency (intra-frequency) measurement, inter-frequency (inter-frequency) measurement, and inter-radio access technology (inter-radio access technology, inter-RAT) measurement.

For example, a measurement metric (metric) (or referred to as a measurement amount) includes at least one of the following: secondary synchronization signal-reference signal received power (secondary synchronization signal-reference signal received power, SS-RSRP) and secondary synchronization signal-reference signal received quality (secondary synchronization signal-reference signal received quality, SS-RSRQ). It may be understood that any measurement metric that can represent cell quality is applicable to embodiments of this application.

The SS-RSRP represents a linear average over a power contribution of a resource element (resource element, RE) that carries a secondary synchronization signal (the linear average over the power contributions of the resource elements that carry secondary synchronization signals). For example, the SS-RSRP is in a unit of watts, that is, an absolute power value.

The SS-RSRQ meets the following formula: SS-RSRQ=N×SS-RSRP/NR carrier RSSI. N represents a quantity of resource blocks (resource block, RB) of a measurement bandwidth of an NR carrier received signal strength indicator (NR carrier received signal strength indicator, NR carrier RSSI). The NR carrier RSSI represents a linear average over total received power under a specific orthogonal frequency division multiplexing (orthogonal frequency division multiplexing, OFDM) symbol (OFDM symbol) and a specific bandwidth (for example, N RBs), and is in a unit of watts. The total power represents total power of co-channel serving and non-serving cells (co-channel serving and non-serving cells), adjacent channel interference (adjacent channel interference), and thermal noise.

For example, the terminal device may measure different cells, and determine, based on a measurement result (for example, the foregoing measurement metric), whether to perform cell reselection.

After a wake-up circuit is introduced, how the terminal device measures a cell is a problem that needs to be considered. In view of this, this application provides a manner, to resolve the foregoing problem.

It should be noted that, in this application, an "indication" may include a direct indication, an indirect indication, an explicit indication, and an implicit indication. When a piece of indication information is described as indicating A, it may be understood as that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information for sending separately; and sending periodicities and/or sending occasions of these pieces of sub-information may be the same or different.

In addition, in this application, the expression "/" indicates an "or" relationship between associated objects. For example, A/B may represent A or B. The expression "and/or" indicates an "and" association relationship or an "or" association relationship between associated objects. For example, A and/or B may indicate the following cases: Only A exists, only B exists, and both A and B exist, where A and B may be singular or plural. "At least one of the following items" or a similar expression thereof indicates any combination of the listed items. For example, at least one of A, B, and (or) C may indicate the following cases: Only A exists, only B exists, only C exists, both A and B exist, both B and C exist, and both A and C exist, where A, B, and C may be singular or plural.

The following describes in detail the method provided in embodiments of this application with reference to the accompanying drawings. Embodiments provided in this application may be applied to the scenario shown in the foregoing figure, and this is not limited.

For example, FIG. 8 is a diagram of a cell measurement method 800 according to an embodiment of this application. For ease of description, an example in which the method 800 is performed by a terminal device is used below for description. It may be understood that the method 800 may alternatively be performed by a component of the terminal device, for example, a chip, a chip system, or a circuit. This is not limited. Steps described below, which are performed by a single execution body, may alternatively be divided into steps performed by a plurality of execution bodies, which may be logically and/or physically separated. The method 800 shown in FIG. 8 may include the following steps.

810: The terminal device measures a serving cell.

Optionally, the terminal device includes a wake-up circuit (or referred to as a wake-up module) and a main circuit (or referred to as a main module), and the terminal device performs serving cell measurement by using the wake-up circuit. Further, optionally, the terminal device performs neighbor cell measurement by using the main circuit. For the wake-up circuit and the main circuit, refer to the descriptions in the foregoing term explanation part. Details are not described herein again.

Specifically, when the terminal device monitors a wake-up signal by using the wake-up circuit, if the terminal device performs cell measurement by using the main circuit, the terminal device needs to periodically turn on the main circuit to perform cell measurement, for example, turn on the main circuit every hundreds of milliseconds or every several seconds to perform cell measurement. This greatly reduces a power gain of the wake-up circuit for the terminal device. Therefore, the wake-up circuit may be used to perform some cell measurement. This reduces an operation of turning on the main circuit to perform cell measurement, and improves a power gain of the wake-up circuit for the terminal device. The cell measurement may also be referred to as RRM measurement, and includes serving cell measurement and neighbor cell measurement.

In a possible implementation, the terminal device performs serving cell measurement by using the wake-up circuit, and performs neighbor cell measurement by using the main circuit.

In another possible implementation, when the terminal device monitors a wake-up signal, the terminal device performs cell measurement by using the wake-up circuit; or when the terminal device monitors a paging message, the terminal device performs cell measurement by using the main circuit. Further, for example, that the terminal device performs cell measurement by using the wake-up circuit includes: The terminal device performs serving cell measurement by using the wake-up circuit. Further, for example, that the terminal device performs cell measurement by using the main circuit includes: The terminal device performs serving cell measurement and/or neighbor cell measurement by using the main circuit.

In embodiments of this application, for ease of description, an example in which the wake-up circuit is used to perform serving cell measurement and the main circuit is used to perform neighbor cell measurement is mainly used for description. It may be understood that all solutions in which the terminal device performs some cell measurement by using the wake-up circuit are applicable to embodiments of this application.

Optionally, that the terminal device measures the serving cell includes: The terminal device receives a first reference signal, and determines cell quality of the serving cell based on the first reference signal.

Specifically, the terminal device determines a value of a measurement amount based on the first reference signal, where the measurement amount may represent the cell quality of the serving cell. For example, the measurement amount includes at least one of the following: reference signal received power (reference signal received power, RSRP) (or may be referred to as low-power (low-power, LP)-RSRP), reference signal received quality (reference signal received quality, RSRQ) (or may be referred to as LP-RSRQ), and a signal to interference plus noise ratio (signal to interference and noise ratio, SINR) (or may be referred to as an LP-SINR).

For example, the first reference signal is a low-power synchronization signal (low-power synchronization signal, LP-SS). Based on this, the measurement amount may be obtained by measuring the LP-SS.

For example, a modulation scheme of the first reference signal is OOK or FSK. That the modulation scheme of the first reference signal is OOK may alternatively be described as follows: In a time interval corresponding to the first reference signal, there is energy at some time domain locations, and there is no energy at some time domain locations.

For example, the terminal device receives the first reference signal by using the wake-up circuit.

820: The terminal device starts to measure or stops measuring a neighbor cell based on the cell quality of the serving cell and M thresholds, where M is an integer greater than 1.

The M thresholds are thresholds for the cell quality of the serving cell. Specifically, the terminal device may compare the cell quality of the serving cell that is obtained through measurement with the threshold, and then perform a corresponding operation based on a comparison result. The threshold may be a value, or may be a value range. This is not limited.

Optionally, that the terminal device measures the neighbor cell includes: The terminal device receives a second reference signal, and determines cell quality of the neighbor cell based on the second reference signal.

Specifically, the terminal device determines a value of a measurement amount based on the second reference signal, where the measurement amount may represent the cell quality of the neighbor cell. For example, the measurement amount includes at least one of the following: RSRP (for example, SS-RSRP), RSRQ (for example, SS-RSRQ), and an SINR.

For example, the second reference signal is an SSB. Based on this, the measurement amount may be obtained by measuring the SSB. For example, the terminal device may perform measurement based on a PSS and/or an SSS and/or a PBCH demodulation reference signal (demodulation reference signal, DMRS) in the SSB.

For example, the terminal device receives the second reference signal by using the main circuit.

For example, M=2, that is, the M thresholds include a first threshold and a second threshold. Optionally, in step 820, that the terminal device starts to measure or stops measuring the neighbor cell based on the cell quality of the serving cell and the M thresholds includes:

When the terminal device has not measured the neighbor cell, the terminal device starts to measure the neighbor cell based on the cell quality of the serving cell and the first threshold.

When the terminal device has measured the neighbor cell, the terminal device stops measuring the neighbor cell based on the cell quality of the serving cell and the second threshold.

The first threshold and the second threshold are different. Specifically, the first threshold and the second threshold have different functions, or the first threshold and the second threshold are two different parameters. Therefore, the first threshold and the second threshold are different.

Based on this, if the terminal device has not performed neighbor cell measurement, the terminal device may determine, based on the cell quality of the serving cell and the first threshold, whether to start to perform neighbor cell measurement; or if the terminal device has performed neighbor cell measurement, the terminal device may determine, based on the cell quality of the serving cell and the second threshold, whether to stop performing neighbor cell measurement. For example, the terminal device performs serving cell measurement by using the wake-up circuit, and performs neighbor cell measurement by using the main circuit. Specifically, if the terminal device currently has performed serving cell measurement by using the wake-up circuit, and has not performed neighbor cell measurement by using the main circuit, the terminal device may determine, based on the cell quality of the serving cell that is measured by using the wake-up circuit and the first threshold, whether to perform neighbor cell measurement by using the main circuit; or if the terminal device currently has performed serving cell measurement by using the wake-up circuit, and has performed neighbor cell measurement by using the main circuit, the terminal device may determine, based on the cell quality of the serving cell that is measured by using the wake-up circuit and the second threshold, whether to stop performing neighbor cell measurement by using the main circuit.

Optionally, that the terminal device starts to measure the neighbor cell based on the cell quality of the serving cell and the first threshold includes: The terminal device starts to measure the neighbor cell when the cell quality of the serving cell is less than or equal to the first threshold; and/or that the terminal device stops measuring the neighbor cell based on the cell quality of the serving cell and the second threshold includes: The terminal device stops measuring the neighbor cell when the cell quality of the serving cell is greater than or equal to the second threshold. On the contrary, the terminal device does not measure the neighbor cell when the cell quality of the serving cell is greater than the first threshold; and/or the terminal device does not stop measuring the neighbor cell when the cell quality of the serving cell is less than the second threshold. Herein and in the following descriptions, "less than or equal to the first threshold" may be replaced with "less than the first threshold", and "greater than or equal to the second threshold" may be replaced with "greater than the second threshold". Correspondingly, "greater than the first threshold" may be replaced with "greater than or equal to the first threshold", and "less than the second threshold" may be replaced with "less than or equal to the second threshold". Related descriptions of a "third threshold" to a "sixth threshold" are similar.

For example, the terminal device performs serving cell measurement by using the wake-up circuit, and performs neighbor cell measurement by using the main circuit. Specifically, when the terminal device has performed serving cell measurement by using the wake-up circuit, and has not performed neighbor cell measurement by using the main circuit, if the cell quality of the serving cell that is measured by the terminal device by using the wake-up circuit is less than or equal to the first threshold, the terminal device starts to perform neighbor cell measurement by using the main circuit; or if the cell quality of the serving cell that is measured by the terminal device by using the wake-up circuit is greater than the first threshold, the terminal device keeps not performing neighbor cell measurement by using the main circuit. When the terminal device has performed serving cell measurement by using the wake-up circuit, and has performed neighbor cell measurement by using the main circuit, if the cell quality of the serving cell that is measured by the terminal device by using the wake-up circuit is greater than or equal to the second threshold, the terminal device stops performing neighbor cell measurement by using the main circuit; or if the cell quality of the serving cell that is measured by the terminal device by using the wake-up circuit is less than the second threshold, the terminal device keeps measuring the neighbor cell by using the main circuit.

The following provides descriptions with reference to FIG. 9.

For example, FIG. 9 is a diagram of cell measurement applicable to an embodiment of this application.

As shown in FIG. 9, in embodiments of this application, a scenario in which the terminal device moves is considered. For example, the terminal device moves from a cell center to a cell edge, or the terminal device moves from the cell edge to the cell center. Therefore, the two thresholds, namely, the first threshold and the second threshold, may be designed. By using the two thresholds, it may be determined how to perform cell measurement, or which circuit (for example, the wake-up circuit and/or the main circuit) is used to perform cell measurement, or whether to perform neighbor cell measurement.

As shown in (a) in FIG. 9, it is assumed that the terminal device moves from the cell center to the cell edge. When the terminal device does not cross a boundary corresponding to the first threshold (that is, the cell quality of the serving cell is greater than the first threshold), the terminal device performs serving cell measurement. When the terminal device crosses the boundary corresponding to the first threshold (that is, the cell quality of the serving cell is less than or equal to the first threshold), considering that the cell quality of the neighbor cell may be better than the cell quality of the serving cell, the terminal device may perform neighbor cell measurement, so that the terminal device can reselect to a cell with better cell quality. In other words, after the terminal device crosses the boundary corresponding to the first threshold, cell measurement performed by the terminal device includes the serving cell measurement and the neighbor cell measurement.

For example, the terminal device measures the serving cell by using the wake-up circuit, and measures the neighbor cell by using the main circuit. Specifically, when the terminal device does not cross the boundary corresponding to the first threshold (that is, the cell quality of the serving cell is greater than the first threshold), the terminal device may perform cell measurement (that is, serving cell measurement) by using the wake-up circuit. When the terminal device crosses the boundary corresponding to the first threshold, the terminal device starts to perform cell measurement (that is, neighbor cell measurement) by using the main circuit. In other words, after the terminal device crosses the boundary corresponding to the first threshold, the cell measurement performed by the terminal device includes the cell measurement (that is, serving cell measurement) performed by using the wake-up circuit and the cell measurement (that is, neighbor cell measurement) performed by using the main circuit.

As shown in (b) in FIG. 9, it is assumed that the terminal device moves from the cell edge to the cell center. When the terminal device does not cross a boundary corresponding to the second threshold (that is, cell quality of a serving cell is less than the second threshold), the terminal device performs serving cell measurement and neighbor cell measurement. When the terminal device crosses the boundary corresponding to the second threshold (that is, the cell quality of the serving cell is greater than or equal to the second threshold), the terminal device may stop performing neighbor cell measurement (in this case, the quality of the serving cell is good enough, and the terminal device does not need to consume power to measure a neighbor cell). In other words, after the terminal device crosses the boundary corresponding to the second threshold, considering that the cell quality of the serving cell may be better than cell quality of the neighbor cell, cell measurement performed by the terminal device is the serving cell measurement.

For example, the terminal device measures the serving cell by using the wake-up circuit, and measures the neighbor cell by using the main circuit. Specifically, when the terminal device does not cross the boundary corresponding to the second threshold (that is, the cell quality of the serving cell is less than the second threshold), the terminal device performs cell measurement by using the wake-up circuit and the main circuit (that is, performs serving cell measurement by using the wake-up circuit, and performs neighbor cell measurement by using the main circuit). When the terminal device crosses the boundary corresponding to the second threshold (that is, the cell quality of the serving cell is greater than or equal to the second threshold), the terminal device stops performing cell measurement by using the main circuit. In other words, after the terminal device crosses the boundary corresponding to the second threshold, the cell measurement performed by the terminal device includes the cell measurement (that is, serving cell measurement) performed by using the wake-up circuit.

Optionally, starting to measure the neighbor cell when the cell quality of the serving cell is less than or equal to the first threshold includes: when the cell quality of the serving cell is less than or equal to the first threshold in a first time period, starting to measure the neighbor cell after the first time period. In this manner, cell quality in a period of time may be compared with the first threshold. Compared with a manner of performing comparison based only on cell quality at a moment, this manner can reduce impact caused by a random error. It may be understood that, in embodiments of this application, the terminal device is not limited to measuring the serving cell at all times in the first time period. For example, the terminal device may perform measurement based on a measurement periodicity in the first time period. For example, assuming that the terminal device measures the serving cell once every 1s, and duration of the first time period is 10s, the terminal device may perform measurement 10 times in the first time period.

In an example, that the cell quality of the serving cell is less than or equal to the first threshold in the first time period may be that the cell quality of the serving cell is less than or equal to the first threshold throughout the first time period. For example, assuming that the terminal device measures the serving cell once every 1s, and duration of the first time period is 10s, that the cell quality of the serving cell is less than or equal to the first threshold in the first time period may be equivalently described as that measurement results of the serving cell for 10 consecutive times are all less than or equal to the first threshold.

In another example, that the cell quality of the serving cell is less than or equal to the first threshold in the first time period may be that a quantity of times that the cell quality of the serving cell is less than or equal to the first threshold exceeds a first preset quantity of times in the first time period. For example, assuming that the terminal device measures the serving cell once every 1s, duration of the first time period is 10s, and the first preset quantity of times is 8, that the cell quality of the serving cell is less than or equal to the first threshold in the first time period may be equivalently described as that measurement results of the serving cell for 8 consecutive times are all less than or equal to the first threshold. The first preset quantity of times is greater than 1, and the first preset quantity of times may be predefined, preconfigured, pre-agreed on, or configured by a network device. This is not limited.

Optionally, stopping measuring the neighbor cell when the cell quality of the serving cell is greater than or equal to the second threshold includes: when the cell quality of the serving cell is greater than or equal to the second threshold in a second time period, stopping measuring the neighbor cell after the second time period. In this manner, cell quality in a period of time may be compared with the second threshold. Compared with a manner of performing comparison based only on cell quality at a moment, this manner can reduce impact caused by a random error.

In an example, that the cell quality of the serving cell is greater than or equal to the second threshold in the second time period may be that the cell quality of the serving cell is greater than or equal to the second threshold throughout the second time period.

In another example, that the cell quality of the serving cell is greater than or equal to the second threshold in the second time period may be that a quantity of times that the cell quality of the serving cell is greater than or equal to the second threshold exceeds a second preset quantity of times in the second time period. The second preset quantity of times is greater than 1, and the second preset quantity of times may be predefined, preconfigured, pre-agreed on, or configured by the network device. This is not limited.

It may be understood that, in embodiments of this application, the terminal device is not limited to measuring the serving cell at all times in the first time period. For details, refer to the foregoing descriptions of the first time period.

Time lengths of the first time period and the second time period may be the same or different. This is not limited.

Optionally, the terminal device may determine the first time period and the second time period in any one of the following manners.

In a first possible implementation, the network device sends indication information #1 to the terminal device, where the indication information #1 indicates the first time period and/or the second time period.

The indication information #1 may be in a form of configuration information. For example, the indication information #1 is configuration information carried in radio resource control (radio resource control, RRC) signaling. For example, the configuration information is carried in the RRC signaling carried in a system information block (system information block, SIB).

In an example, the indication information #1 indicates the first time period and the second time period. In this implementation, the terminal device may learn of the first time period and the second time period based on the indication information #1.

In another example, the indication information #1 indicates the first time period, and the first time period is associated with the second time period. The terminal device may learn of the first time period based on the indication information #1, and determine, based on the association relationship between the first time period and the second time period, the second time period associated with the first time period.

In another example, the indication information #1 indicates the second time period, and the first time period is associated with the second time period. The terminal device may learn of the second time period based on the indication information #1, and determine, based on the association relationship between the first time period and the second time period, the first time period associated with the second time period.

In the foregoing two examples, the association relationship between the first time period and the second time period may be predefined, preconfigured, pre-agreed on, or indicated by the network device. This is not limited.

In another example, the indication information #1 indicates the second time period, and the first time period is predefined, preconfigured, or pre-agreed on.

In another example, the indication information #1 indicates the first time period, and the second time period is predefined, preconfigured, or pre-agreed on.

In a second possible implementation, the first time period and the second time period are predefined, preconfigured, or pre-agreed on.

In a third possible implementation, a time period is associated with a threshold. In this way, the time period associated with the threshold may be determined by using the threshold.

In an example, the first time period is associated with the first threshold. After determining the first threshold, the terminal device may determine, based on the association relationship between the first threshold and the first time period, the first time period associated with the first threshold. The association relationship between the first time period and the first threshold may be predefined, preconfigured, pre-agreed on, or indicated by the network device. This is not limited. For a manner of determining the first threshold by the terminal device, refer to the following descriptions.

In another example, the second time period is associated with the second threshold. After determining the second threshold, the terminal device may determine, based on the association relationship between the second threshold and the second time period, the second time period associated with the second threshold. The association relationship between the second time period and the second threshold may be predefined, preconfigured, pre-agreed on, or indicated by the network device. This is not limited. For a manner of determining the second threshold by the terminal device, refer to the following descriptions.

It may be understood that the foregoing three implementations are examples for description, and this is not limited. All variations of the foregoing implementations are applicable to embodiments of this application.

Values of the first threshold and the second threshold may be different, or may partially overlap. This is not limited. For example, the first threshold corresponds to a value range, the second threshold corresponds to a value range, and the value range corresponding to the first threshold may partially overlap the value range corresponding to the second threshold.

Optionally, the first threshold is less than the second threshold. FIG. 9 is used as an example. When the terminal device moves from the cell center to the cell edge, the terminal device starts to measure the neighbor cell by using the main circuit only when the cell quality of the serving cell is less than or equal to the first threshold. Therefore, the first threshold is set to a low value. In this way, the terminal device can perform serving cell measurement in a larger range, that is, measure the serving cell by using the wake-up circuit, thereby achieving an energy saving effect.

Optionally, the terminal device may determine the first threshold and the second threshold in any one of the following manners.

In a first possible implementation, the network device sends indication information #2 to the terminal device, where the indication information #2 indicates the first threshold and/or the second threshold.

The indication information #2 may be in a form of configuration information. For example, the indication information #2 is configuration information carried in RRC signaling. For example, the configuration information is carried in the RRC signaling carried in a SIB. The indication information #2 and the indication information #1 may be carried in same signaling, or may be carried in different signaling. This is not limited.

In an example, the indication information #2 indicates the first threshold and the second threshold. In this implementation, the terminal device may learn of the first threshold and the second threshold based on the indication information #2.

In another example, the indication information #2 indicates the first threshold, and the first threshold is associated with the second threshold. The terminal device may learn of the first threshold based on the indication information #2, and determine, based on the association relationship between the first threshold and the second threshold, the second threshold associated with the first threshold.

In another example, the indication information #2 indicates the second threshold, and the first threshold is associated with the second threshold. The terminal device may learn of the second threshold based on the indication information #2, and determine, based on the association relationship between the first threshold and the second threshold, the first threshold associated with the second threshold.

In the foregoing two examples, the association relationship between the first threshold and the second threshold may be predefined, preconfigured, pre-agreed on, or indicated by the network device. This is not limited.

In another example, the indication information #2 indicates the second threshold, and the first threshold is predefined, preconfigured, or pre-agreed on.

In another example, the indication information #2 indicates the first threshold, and the second threshold is predefined, preconfigured, or pre-agreed on.

In a second possible implementation, the first threshold and the second threshold are predefined, preconfigured, or pre-agreed on.

In a third possible implementation, a time period is associated with a threshold. In this way, the threshold associated with the time period may be determined by using the time period.

In an example, the first time period is associated with the first threshold. After determining the first time period, the terminal device may determine, based on the association relationship between the first threshold and the first time period, the first threshold associated with the first time period. The association relationship between the first time period and the first threshold may be predefined, preconfigured, pre-agreed on, or indicated by the network device. This is not limited. For a manner of determining the first time period by the terminal device, refer to the foregoing descriptions.

In another example, the second time period is associated with the second threshold. After determining the second time period, the terminal device may determine, based on the association relationship between the second threshold and the second time period, the second threshold associated with the second time period. The association relationship between the second time period and the second threshold may be predefined, preconfigured, pre-agreed on, or indicated by the network device. This is not limited. For a manner of determining the second time period by the terminal device, refer to the following descriptions.

It may be understood that the foregoing three implementations are examples for description, and this is not limited. All variations of the foregoing implementations are applicable to embodiments of this application.

The foregoing manner of determining, by using the M thresholds (for example, the first threshold and the second threshold), how to perform cell measurement, or which circuit (for example, the wake-up circuit and/or the main circuit) is used to perform cell measurement, or whether to perform neighbor cell measurement is more accurate than that of one threshold.

Specifically, it is assumed that the threshold is used to determine how to perform cell measurement. For example, when the cell quality of the serving cell that is measured by the terminal device by using the wake-up circuit is higher than the threshold, it may be considered that the terminal device is in the cell center. In this case, the terminal device is far away from the neighbor cell, and may not measure the neighbor cell. When the cell quality of the serving cell that is measured by the terminal device by using the wake-up circuit is lower than the threshold, it may be considered that the terminal device is at the cell edge. In this case, the terminal device is close to the neighbor cell, and may measure the neighbor cell. Considering that the wake-up circuit is a low-power receiver, measurement precision may be poor.

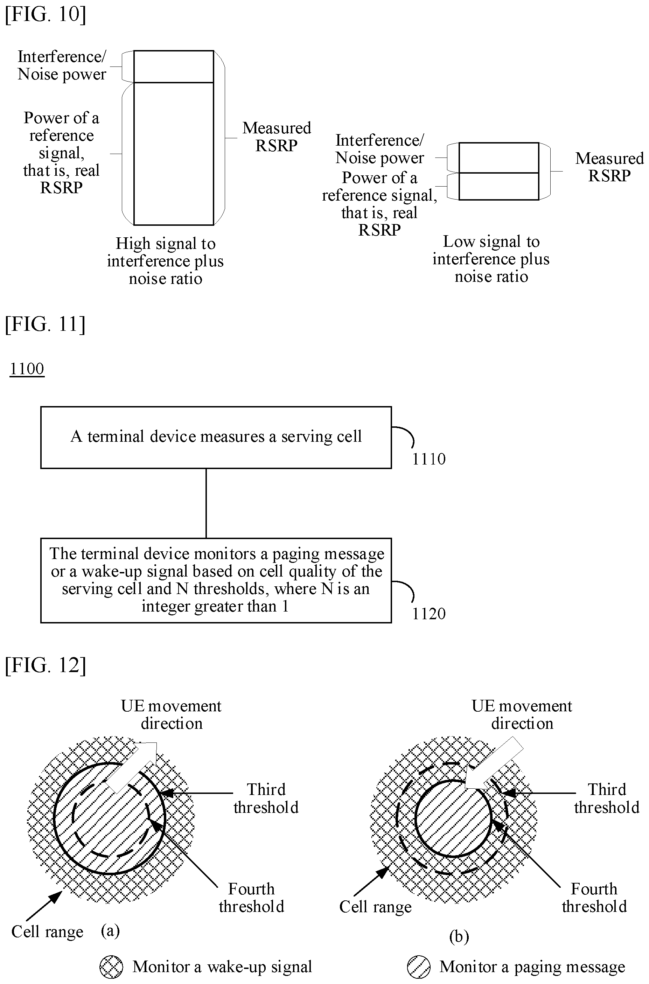

For example, FIG. 10 is a diagram of measurement performed by a wake-up circuit in different signal-to-noise ratios. As shown in FIG. 10, for example, cell quality is represented by RSRP. In a case of a high signal-to-noise ratio, power of a signal (a signal used for cell measurement) is higher than interference/noise power. Therefore, interference/noise has small impact on a measurement result (that is, measured RSRP). In a case of a low signal-to-noise ratio, power of a signal (a signal used for cell measurement) is equivalent to interference/noise power, and even the power of the signal is lower than the interference/noise power. Therefore, interference/noise may have large impact on a measurement result (that is, measured RSRP). It is assumed that one threshold is used to determine how to perform cell measurement. In this case, if the threshold is set to a high value, the threshold may correspond to a case of a high signal to interference plus noise ratio (SINR). In this case, a measurement result is reliable. However, the condition can be met only when the terminal device is in the cell center, that is, the terminal device does not need to perform neighbor cell measurement only in the cell center. This reduces an overall power gain. If the threshold is set to a low value, the threshold may correspond to a case of a low signal to interference plus noise ratio. In this case, a measurement result may be unreliable, and interference/noise may cause a ping-pong effect (that is, due to random fluctuation of the interference/noise, RSRP measured by the terminal device is higher than the threshold sometimes and lower than the threshold sometimes).

Therefore, the foregoing problem can be avoided by designing at least two thresholds (for example, the first threshold and the second threshold). Specifically, when the terminal device moves from the cell center to the cell edge, the terminal device may compare the cell quality of the serving cell with the first threshold. For example, the terminal device starts to measure the neighbor cell by using the main circuit only when the cell quality of the serving cell is less than or equal to the first threshold. In this way, the terminal device can perform serving cell measurement in a larger range, that is, measure the serving cell by using the wake-up circuit, thereby achieving an energy saving effect. When the terminal device moves from the cell edge to the cell center, the terminal device may compare the cell quality of the serving cell with the second threshold. For example, the terminal device stops measuring the neighbor cell only when the cell quality of the serving cell is greater than or equal to the second threshold. In this way, impact of interference/noise on a measurement result can be reduced, and a ping-pong effect can be avoided.

For example, FIG. 11 is a diagram of a cell measurement method 1100 according to another embodiment of this application. For ease of description, an example in which the method 1100 is performed by a terminal device is used below for description. It may be understood that the method 1100 may alternatively be performed by a component of the terminal device, for example, a chip, a chip system, or a circuit. This is not limited. Steps described below, which are performed by a single execution body, may alternatively be divided into steps performed by a plurality of execution bodies, which may be logically and/or physically separated. The method 1100 shown in FIG. 11 may include the following steps.

1110: The terminal device measures a serving cell.

Optionally, the terminal device includes a wake-up circuit (or referred to as a wake-up module) and a main circuit (or referred to as a main module), and the terminal device may perform serving cell measurement by using the wake-up circuit, or may perform serving cell measurement by using the main circuit. Further, optionally, the terminal device performs neighbor cell measurement by using the main circuit.

1120: The terminal device monitors a paging message or a wake-up signal based on cell quality of the serving cell and N thresholds, where N is an integer greater than 1.

The N thresholds are thresholds for the cell quality of the serving cell. Specifically, the terminal device may compare the cell quality of the serving cell that is obtained through measurement with the threshold, and then perform a corresponding operation based on a comparison result. The threshold may be a value, or may be a value range. This is not limited.

Monitoring (monitor) may alternatively be replaced with receiving, detecting, or reading.

For the wake-up signal and the paging message, refer to the descriptions in the foregoing term explanation part. Details are not described herein again.

For example, N=2, that is, the N thresholds include a third threshold and a fourth threshold. Optionally, in step 820, that the terminal device monitors the paging message or the wake-up signal based on the cell quality of the serving cell and the N thresholds includes:

When the wake-up signal is monitored, the terminal device monitors the paging message based on the cell quality of the serving cell and the third threshold.

When the paging message is monitored, the terminal device monitors the wake-up signal based on the cell quality of the serving cell and the fourth threshold.

The third threshold and the fourth threshold are different. Specifically, the third threshold and the fourth threshold have different functions, or the third threshold and the fourth threshold are two different parameters. Therefore, the third threshold and the fourth threshold are different.

Based on this, when the terminal device monitors the wake-up signal, the terminal device may determine, based on the cell quality of the serving cell and the third threshold, whether to monitor the paging message. When the terminal device monitors the paging message, the terminal device may determine, based on the cell quality of the serving cell and the fourth threshold, whether to monitor the wake-up signal.

Optionally, the terminal device includes a wake-up circuit (or referred to as a wake-up module) and a main circuit (or referred to as a main module). The terminal device monitors the wake-up signal by using the wake-up circuit, and the terminal device monitors the paging message by using the main circuit.

Optionally, the terminal device includes a wake-up circuit (or referred to as a wake-up module) and a main circuit (or referred to as a main module). That the terminal device monitors the paging message may alternatively be replaced with that the terminal device performs serving cell measurement by using the main circuit. That the terminal device monitors the wake-up signal may alternatively be replaced with that the terminal device performs serving cell measurement by using the wake-up circuit.

Based on this, when the terminal device monitors the wake-up signal (that is, when the terminal device performs serving cell measurement by using the wake-up circuit), the terminal device may determine, based on the cell quality of the serving cell that is measured by using the wake-up circuit and the third threshold, whether to monitor the paging message (that is, whether to perform serving cell measurement by using the main circuit). When the terminal device monitors the paging message (that is, when the terminal device performs serving cell measurement by using the main circuit), the terminal device may determine, based on the cell quality of the serving cell that is measured by using the main circuit and the fourth threshold, whether to monitor the wake-up signal (that is, whether to perform serving cell measurement by using the wake-up circuit).

Optionally, that the terminal device monitors the paging message based on the cell quality of the serving cell and the third threshold includes: The terminal device monitors the paging message when the cell quality of the serving cell is less than or equal to the third threshold; and/or that the terminal device monitors the wake-up signal based on the cell quality of the serving cell and the fourth threshold includes: The terminal device monitors the wake-up signal when the cell quality of the serving cell is greater than or equal to the fourth threshold. On the contrary, the terminal device does not monitor the paging message when the cell quality of the serving cell is greater than the third threshold; and/or the terminal device does not monitor the wake-up signal when the cell quality of the serving cell is less than the fourth threshold.

Specifically, when the terminal device monitors the wake-up signal (that is, when the terminal device performs serving cell measurement by using the wake-up circuit), if the cell quality of the serving cell that is measured by the terminal device by using the wake-up circuit is less than or equal to the third threshold, the terminal device starts to monitor the paging message (that is, starts to perform serving cell measurement by using the main circuit); or if the cell quality of the serving cell that is measured by the terminal device by using the wake-up circuit is greater than the third threshold, the terminal device keeps (or maintains) monitoring the wake-up signal (that is, keeps performing serving cell measurement by using the wake-up circuit), and does not monitor the paging message (that is, does not perform serving cell measurement by using the main circuit). When the terminal device monitors the paging message (that is, when the terminal device performs serving cell measurement by using the main circuit), if the cell quality of the serving cell that is measured by the terminal device by using the main circuit is greater than or equal to the fourth threshold, the terminal device starts to monitor the wake-up signal (that is, starts to perform serving cell measurement by using the wake-up circuit); or if the cell quality of the serving cell that is measured by the terminal device by using the main circuit is less than the fourth threshold, the terminal device keeps (or maintains) monitoring the paging message (that is, maintains performing serving cell measurement by using the main circuit), and does not monitor the wake-up signal (that is, does not perform serving cell measurement by using the wake-up circuit).

The following provides descriptions with reference to FIG. 12.

For example, FIG. 12 is a diagram of cell measurement applicable to another embodiment of this application.

As shown in FIG. 12, in embodiments of this application, a scenario in which the terminal device moves is considered. For example, the terminal device moves from a cell center to a cell edge, or the terminal device moves from the cell edge to the cell center. Therefore, the two thresholds, namely, the third threshold and the fourth threshold, may be designed. By using the two thresholds, it may be determined whether the paging message or the wake-up signal is monitored, or which circuit (for example, the wake-up circuit and/or the main circuit) is used to perform serving cell measurement.

As shown in (a) in FIG. 12, it is assumed that the terminal device moves from the cell center to the cell edge. When the terminal device does not cross a boundary corresponding to the third threshold (that is, the cell quality of the serving cell is greater than the third threshold), the terminal device monitors the wake-up signal (that is, performs serving cell measurement by using the wake-up circuit). When the terminal device crosses the boundary corresponding to the third threshold (that is, the cell quality of the serving cell is less than or equal to the third threshold), the terminal device starts to monitor the paging message (that is, starts to perform serving cell measurement by using the main circuit).

As shown in (b) in FIG. 12, it is assumed that the terminal device moves from the cell edge to the cell center. When the terminal device does not cross a boundary corresponding to the fourth threshold (that is, the cell quality of the serving cell is less than the fourth threshold), the terminal device monitors the paging message (that is, the terminal device performs serving cell measurement by using the main circuit). When the terminal device crosses the boundary corresponding to the fourth threshold (that is, the cell quality of the serving cell is greater than or equal to the fourth threshold), the terminal device starts to monitor the wake-up signal (that is, starts to perform serving cell measurement by using the wake-up circuit).

Optionally, after the terminal device determines, based on the cell quality of the serving cell and the third threshold, to monitor the paging message, the terminal device no longer monitors the wake-up signal.

For example, when the terminal device monitors the wake-up signal (that is, when the terminal device performs serving cell measurement by using the wake-up circuit), if the cell quality of the serving cell that is measured by the terminal device by using the wake-up circuit is less than or equal to the third threshold, the terminal device starts to monitor the paging message (that is, starts to perform serving cell measurement by using the main circuit), and the terminal device no longer monitors the wake-up signal (that is, no longer performs serving cell measurement by using the wake-up circuit).

Optionally, after the terminal device determines, based on the cell quality of the serving cell and the fourth threshold, to monitor the wake-up signal, the terminal device no longer monitors the paging message.

For example, when the terminal device monitors the paging message (that is, when the terminal device performs serving cell measurement by using the main circuit), if the cell quality of the serving cell that is measured by the terminal device by using the main circuit is greater than or equal to the fourth threshold, the terminal device starts to monitor the wake-up signal (that is, starts to perform serving cell measurement by using the wake-up circuit), and the terminal device no longer monitors the paging message (that is, no longer performs serving cell measurement by using the main circuit).

Optionally, the monitoring the paging message when the cell quality of the serving cell is less than or equal to the third threshold includes: When the cell quality of the serving cell is less than or equal to the third threshold in a third time period, the terminal device starts to monitor the paging message after the third time period. In other words, when the cell quality of the serving cell that is measured by the terminal device by using the wake-up circuit is less than or equal to the third threshold in the third time period, the terminal device starts to measure the serving cell by using the main circuit after the third time period. In this manner, cell quality in a period of time may be compared with the third threshold. Compared with a manner of performing comparison based only on cell quality at a moment, this manner can reduce impact caused by a random error. It may be understood that, in embodiments of this application, the terminal device is not limited to measuring the serving cell at all times in the third time period. For example, the terminal device may perform measurement based on a measurement periodicity in the third time period. For example, assuming that the terminal device measures the serving cell once every 1s, and duration of the third time period is 10s, the terminal device may perform measurement 10 times in the third time period.

In an example, that the cell quality of the serving cell is less than or equal to the third threshold in the third time period may be that the cell quality of the serving cell is less than or equal to the third threshold throughout the third time period. For example, assuming that the terminal device measures the serving cell once every 1s, and duration of the third time period is 10s, that the cell quality of the serving cell is less than or equal to the third threshold in the third time period may be equivalently described as that measurement results of the serving cell for 10 consecutive times are all less than or equal to the third threshold.

In another example, that the cell quality of the serving cell is less than or equal to the third threshold in the third time period may be that a quantity of times that the cell quality of the serving cell is less than or equal to the third threshold exceeds a third preset quantity of times in the third time period. For example, assuming that the terminal device measures the serving cell once every 1s, duration of the third time period is 10s, and the third preset quantity of times is 7, that the cell quality of the serving cell is less than or equal to the third threshold in the third time period may be equivalently described as that measurement results of the serving cell for 7 consecutive times are all less than or equal to the third threshold. The third preset quantity of times is greater than 1, and the third preset quantity of times may be predefined, preconfigured, pre-agreed on, or configured by a network device. This is not limited.

Optionally, the monitoring the wake-up signal when the cell quality of the serving cell is greater than or equal to the fourth threshold includes: when the cell quality of the serving cell is greater than or equal to the fourth threshold in a fourth time period, starting to monitor the wake-up signal after the fourth time period. In other words, when the cell quality of the serving cell that is measured by the terminal device by using the main circuit is greater than or equal to the fourth threshold in the fourth time period, the terminal device starts to measure the serving cell by using the wake-up circuit after the fourth time period. In this manner, cell quality in a period of time may be compared with the fourth threshold. Compared with a manner of performing comparison based only on cell quality at a moment, this manner can reduce impact caused by a random error.

In an example, that the cell quality of the serving cell is greater than or equal to the fourth threshold in the fourth time period may be that the cell quality of the serving cell is greater than or equal to the fourth threshold throughout the fourth time period.

In another example, that the cell quality of the serving cell is greater than or equal to the fourth threshold in the fourth time period may be that a quantity of times that the cell quality of the serving cell is greater than or equal to the third threshold exceeds a fourth preset quantity of times in the fourth time period. The fourth preset quantity of times is greater than 1, and the fourth preset quantity of times may be predefined, preconfigured, pre-agreed on, or configured by the network device. This is not limited.

It may be understood that, in embodiments of this application, the terminal device is not limited to measuring the serving cell at all times in the fourth time period. For details, refer to the foregoing descriptions of the third time period.

Time lengths of the third time period and the fourth time period may be the same or different. This is not limited.

Optionally, the terminal device may determine the third time period and the fourth time period in any one of the following manners.

In a first possible implementation, the network device sends indication information #3 to the terminal device, where the indication information #3 indicates the third time period and/or the fourth time period.

The indication information #3 may be in a form of configuration information. For example, the indication information #3 is configuration information carried in RRC signaling. For example, the configuration information is carried in the RRC signaling carried in a SIB.

In an example, the indication information #3 indicates the third time period and the fourth time period. In this implementation, the terminal device may learn of the third time period and the fourth time period based on the indication information #3.

In another example, the indication information #3 indicates the third time period, and the third time period is associated with the fourth time period. The terminal device may learn of the third time period based on the indication information #3, and determine, based on the association relationship between the third time period and the fourth time period, the fourth time period associated with the third time period.

In another example, the indication information #3 indicates the fourth time period, and the third time period is associated with the fourth time period. The terminal device may learn of the fourth time period based on the indication information #3, and determine, based on the association relationship between the third time period and the fourth time period, the third time period associated with the fourth time period.

In the foregoing two examples, the association relationship between the third time period and the fourth time period may be predefined, preconfigured, pre-agreed on, or indicated by the network device. This is not limited.

In another example, the indication information #3 indicates the fourth time period, and the third time period is predefined, preconfigured, or pre-agreed on.

In another example, the indication information #3 indicates the third time period, and the fourth time period is predefined, preconfigured, or pre-agreed on.

In a second possible implementation, the third time period and the fourth time period are predefined, preconfigured, or pre-agreed on.

In a third possible implementation, a time period is associated with a threshold. In this way, the time period associated with the threshold may be determined by using the threshold.

In an example, the third time period is associated with the third threshold. After determining the third threshold, the terminal device may determine, based on the association relationship between the third threshold and the third time period, the third time period associated with the third threshold. The association relationship between the third time period and the third threshold may be predefined, preconfigured, pre-agreed on, or indicated by the network device. This is not limited. For a manner of determining the third threshold by the terminal device, refer to the following descriptions.

In another example, the fourth time period is associated with the fourth threshold. After determining the fourth threshold, the terminal device may determine, based on the association relationship between the fourth threshold and the fourth time period, the fourth time period associated with the fourth threshold. The association relationship between the fourth time period and the fourth threshold may be predefined, preconfigured, pre-agreed on, or indicated by the network device. This is not limited. For a manner of determining the fourth threshold by the terminal device, refer to the following descriptions.

It may be understood that the foregoing three implementations are examples for description, and this is not limited. All variations of the foregoing implementations are applicable to embodiments of this application.

Values of the third threshold and the fourth threshold may be different, or may partially overlap. This is not limited. For example, the third threshold corresponds to a value range, the fourth threshold corresponds to a value range, and the value range corresponding to the third threshold may partially overlap the value range corresponding to the fourth threshold.

Optionally, the third threshold is less than the fourth threshold. FIG. 12 is used as an example. When the terminal device moves from the cell center to the cell edge, the terminal device starts to monitor the paging message only when the cell quality of the serving cell is less than or equal to the third threshold. Therefore, the third threshold is set to a low value. In this way, the terminal device can monitor the wake-up signal in a larger range, that is, measure the serving cell by using the wake-up circuit, thereby achieving an energy saving effect.

Optionally, the terminal device may determine the third threshold and the fourth threshold in any one of the following manners.

In a first possible implementation, the network device sends indication information #4 to the terminal device, where the indication information #4 indicates the third threshold and/or the fourth threshold.

The indication information #4 may be in a form of configuration information. For example, the indication information #4 is configuration information carried in RRC signaling. For example, the configuration information is carried in the RRC signaling carried in a SIB. The indication information #4 and the indication information #3 may be carried in same signaling, or may be carried in different signaling. This is not limited.

In an example, the indication information #4 indicates the third threshold and the fourth threshold. In this implementation, the terminal device may learn of the third threshold and the fourth threshold based on the indication information #4.

In another example, the indication information #4 indicates the third threshold, and the third threshold is associated with the fourth threshold. The terminal device may learn of the third threshold based on the indication information #4, and determine, based on the association relationship between the third threshold and the fourth threshold, the fourth threshold associated with the third threshold.

In another example, the indication information #4 indicates the fourth threshold, and the third threshold is associated with the fourth threshold. The terminal device may learn of the fourth threshold based on the indication information #4, and determine, based on the association relationship between the third threshold and the fourth threshold, the third threshold associated with the fourth threshold.

In the foregoing two examples, the association relationship between the third threshold and the fourth threshold may be predefined, preconfigured, pre-agreed on, or indicated by the network device. This is not limited.

In another example, the indication information #4 indicates the fourth threshold, and the third threshold is predefined, preconfigured, or pre-agreed on.

In another example, the indication information #4 indicates the third threshold, and the fourth threshold is predefined, preconfigured, or pre-agreed on.

In a second possible implementation, the third threshold and the fourth threshold are predefined, preconfigured, or pre-agreed on.

In a third possible implementation, a time period is associated with a threshold. In this way, the threshold associated with the time period may be determined by using the time period.

In an example, the third time period is associated with the third threshold. After determining the third time period, the terminal device may determine, based on the association relationship between the third threshold and the third time period, the third threshold associated with the third time period. The association relationship between the third time period and the third threshold may be predefined, preconfigured, pre-agreed on, or indicated by the network device. This is not limited. For a manner of determining the third time period by the terminal device, refer to the foregoing descriptions.

In another example, the fourth time period is associated with the fourth threshold. After determining the fourth time period, the terminal device may determine, based on the association relationship between the fourth threshold and the fourth time period, the fourth threshold associated with the fourth time period. The association relationship between the fourth time period and the fourth threshold may be predefined, preconfigured, pre-agreed on, or indicated by the network device. This is not limited. For a manner of determining the fourth time period by the terminal device, refer to the following descriptions.

It may be understood that the foregoing three implementations are examples for description, and this is not limited. All variations of the foregoing implementations are applicable to embodiments of this application.

Optionally, in embodiments of this application, when the terminal device determines, based on the cell quality of the serving cell and the third threshold, whether to monitor the paging message, the quality of the serving cell is determined based on a third reference signal. Specifically, the terminal device receives the third reference signal, and determines, based on the third threshold and the cell quality of the serving cell that is determined based on the third reference signal, whether to monitor the paging message. Specifically, the terminal device determines a value of a measurement amount based on the third reference signal, where the measurement amount may represent the cell quality of the serving cell. For example, the measurement amount includes at least one of the following: RSRP (or may be referred to as LP-RSRP), RSRQ (or may be referred to as LP-RSRQ), and an SINR (or may be referred to as an LP-SINR).

For example, the third reference signal is an LP-SS. Based on this, the measurement amount may be obtained by measuring the LP-SS.

For example, a modulation scheme of the third reference signal is OOK or FSK. That the modulation scheme of the third reference signal is OOK may alternatively be described as follows: In a time interval corresponding to the third reference signal, there is energy at some time domain locations, and there is no energy at some time domain locations.

For example, the terminal device receives the third reference signal by using the wake-up circuit.

Optionally, in embodiments of this application, when the terminal device determines, based on the cell quality of the serving cell and the fourth threshold, whether to monitor the wake-up signal, the quality of the serving cell is determined based on a fourth reference signal. Specifically, the terminal device receives the fourth reference signal, and determines, based on the fourth threshold and the cell quality of the serving cell that is determined based on the fourth reference signal, whether to monitor the wake-up signal. Specifically, the terminal device determines a value of a measurement amount based on the fourth reference signal, where the measurement amount may represent the cell quality of the serving cell. For example, the measurement amount includes at least one of the following: RSRP (for example, SS-RSRP), RSRQ (for example, SS-RSRQ), and an SINR.

For example, the fourth reference signal is an SSB. Based on this, the measurement amount may be obtained by measuring the SSB. For example, the terminal device may perform measurement based on a PSS and/or an SSS and/or a PBCH DMRS in the SSB.

For example, the terminal device receives the fourth reference signal by using the main circuit.

The foregoing manner of monitoring the paging message or the wake-up signal by using the N thresholds (for example, the third threshold and the fourth threshold), or which circuit (for example, the wake-up circuit and/or the main circuit) is used to perform serving cell measurement is more accurate than that of one threshold. Specifically, it is assumed that one threshold is used to determine whether to monitor the paging message or the wake-up signal. In this case, if the threshold is set to a high value, the threshold may correspond to a case of a high signal to interference plus noise ratio. In this case, a measurement result is reliable. However, the condition can be met only when the terminal device is in the cell center, that is, the terminal device does not need to monitor the paging message only in the cell center. This reduces an overall power gain. If the threshold is set to a low value, the threshold may correspond to a case of a low signal to interference plus noise ratio. In this case, a measurement result may be unreliable, and interference/noise may cause a ping-pong effect (that is, due to random fluctuation of the interference/noise, RSRP measured by the terminal device is higher than the threshold sometimes and lower than the threshold sometimes). For details, refer to the related descriptions in the method 800.

Therefore, the foregoing problem can be avoided by designing at least two thresholds (for example, the third threshold and the fourth threshold). Specifically, when the terminal device moves from the cell center to the cell edge, the terminal device may compare the cell quality of the serving cell with the third threshold. For example, the terminal device starts to monitor the paging message only when the cell quality of the serving cell is less than or equal to the third threshold. In this way, the terminal device can monitor the wake-up signal in a larger range, that is, measure the serving cell by using the wake-up circuit, thereby achieving an energy saving effect. When the terminal device moves from the cell edge to the cell center, the terminal device may compare the cell quality of the serving cell with the fourth threshold. For example, the terminal device monitors the wake-up signal (that is, measures the serving cell by using the wake-up circuit) only when the cell quality of the serving cell is greater than or equal to the fourth threshold. In this way, impact of interference/noise on a measurement result can be reduced, and a ping-pong effect can be avoided.

The foregoing separately describes related solutions of the M thresholds and the N thresholds with reference to the methods 800 and 1100. It may be understood that the methods 800 and 1100 may be used separately, or may be used together. This is not limited. The following briefly describes a case in which the methods 800 and 1100 are used together. For details that are not described in detail, refer to the foregoing method 800 and method 1100.

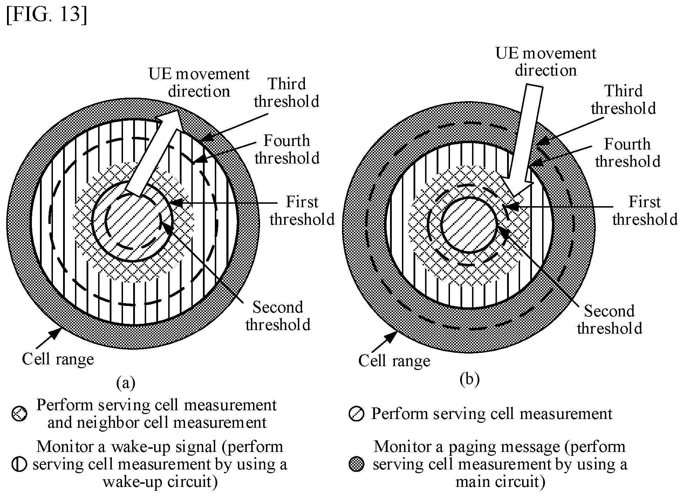

For example, FIG. 13 is a diagram of cell measurement applicable to another embodiment of this application.

It is assumed that the M thresholds include the first threshold and the second threshold, and the N thresholds include the third threshold and the fourth threshold. For example, a threshold in the M thresholds is greater than a threshold in the N thresholds.

As shown in (a) in FIG. 13, it is assumed that the terminal device moves from the cell center to the cell edge. When the terminal device does not cross a boundary corresponding to the first threshold (that is, the cell quality of the serving cell is greater than the first threshold), the terminal device may perform serving cell measurement (that is, perform serving cell measurement by using the wake-up circuit). When the terminal device crosses the boundary corresponding to the first threshold (that is, the cell quality of the serving cell is less than or equal to the first threshold), considering that the cell quality of the neighbor cell may be better than the cell quality of the serving cell, the terminal device may perform neighbor cell measurement (that is, perform neighbor cell measurement by using the main circuit). In other words, after the terminal device crosses the boundary corresponding to the first threshold, cell measurement performed by the terminal device includes the serving cell measurement performed by using the wake-up circuit and the neighbor cell measurement performed by using the main circuit. Further, when the cell quality of the serving cell crosses a boundary corresponding to the third threshold (that is, the cell quality of the serving cell that is measured by the terminal device by using the wake-up circuit is less than or equal to the third threshold), the terminal device starts to monitor the paging message (that is, the terminal device starts to perform serving cell measurement by using the main circuit).

As shown in (b) in FIG. 13, it is assumed that the terminal device moves from the cell edge to the cell center. When the terminal device does not cross a boundary corresponding to the fourth threshold (that is, the cell quality of the serving cell is less than the fourth threshold), the terminal device monitors the paging message (that is, the terminal device performs serving cell measurement by using the main circuit). When the terminal device crosses the boundary corresponding to the fourth threshold (that is, the cell quality of the serving cell is greater than or equal to the fourth threshold), the terminal device starts to monitor the wake-up signal (that is, starts to perform serving cell measurement by using the wake-up circuit), and the terminal device may further perform neighbor cell measurement by using the main circuit. Further, when the cell quality of the serving cell crosses a boundary corresponding to the second threshold (that is, the cell quality of the serving cell that is measured by the terminal device by using the wake-up circuit is greater than or equal to the second threshold), the terminal device stops performing neighbor cell measurement.

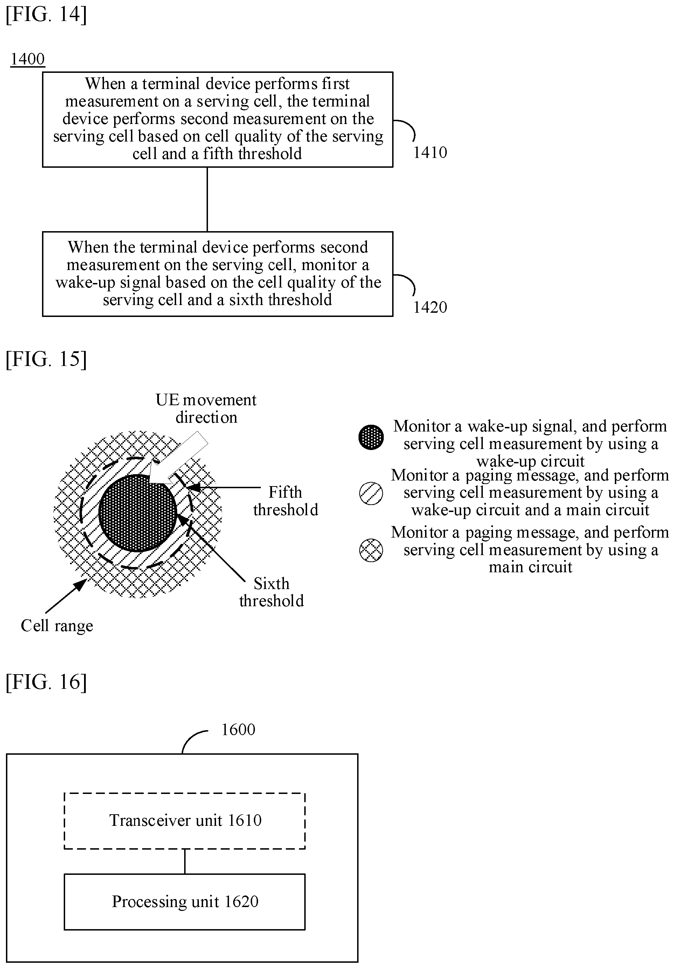

For example, FIG. 14 is a diagram of a cell measurement method 1400 according to another embodiment of this application. For ease of description, an example in which the method 1400 is performed by a terminal device is used below for description. It may be understood that the method 1400 may alternatively be performed by a component of the terminal device, for example, a chip, a chip system, or a circuit. This is not limited. Steps described below, which are performed by a single execution body, may alternatively be divided into steps performed by a plurality of execution bodies, which may be logically and/or physically separated. The method 1400 shown in FIG. 14 may include the following steps.

1410: When the terminal device performs first measurement on a serving cell, the terminal device performs second measurement on the serving cell based on cell quality of the serving cell and a fifth threshold.

1420: When the terminal device performs second measurement on the serving cell, monitor a wake-up signal based on the cell quality of the serving cell and a sixth threshold.

The fifth threshold and the sixth threshold are thresholds for the cell quality of the serving cell. Specifically, the terminal device may compare the cell quality of the serving cell that is obtained through measurement with the threshold, and then perform a corresponding operation based on a comparison result. The fifth threshold and the sixth threshold may be a value, or may be a value range. This is not limited.

The fifth threshold and the sixth threshold are different. Specifically, the fifth threshold and the sixth threshold have different functions, or the fifth threshold and the sixth threshold are two different parameters. Therefore, the fifth threshold and the sixth threshold are different.

Based on this, when the terminal device performs first measurement on the serving cell, the terminal device may determine, based on the cell quality of the serving cell and the fifth threshold, whether to perform second measurement on the serving cell. When the terminal device performs second measurement on the serving cell, the terminal device may determine, based on the cell quality of the serving cell and the sixth threshold, whether to monitor the wake-up signal.

Optionally, the terminal device includes a wake-up circuit (or referred to as a wake-up module) and a main circuit (or referred to as a main module); that the terminal device performs first measurement on the serving cell includes: The terminal device measures the serving cell by using the main circuit; and that the terminal device performs second measurement on the serving cell includes: The terminal device measures the serving cell by using the wake-up circuit. Based on this, when the terminal device performs serving cell measurement by using the main circuit, the terminal device may determine, based on the cell quality of the serving cell and the fifth threshold, whether to perform serving cell measurement by using the wake-up circuit. When the terminal device performs serving cell measurement by using the wake-up circuit, the terminal device may determine, based on the cell quality of the serving cell and the sixth threshold, whether to monitor the wake-up signal by using the wake-up circuit.

For the wake-up circuit, the main circuit, and the wake-up signal, refer to the descriptions in the foregoing term explanation part. Details are not described herein again.

Optionally, that the terminal device performs second measurement on the serving cell based on the cell quality of the serving cell and the fifth threshold includes: The terminal device performs second measurement on the serving cell when the cell quality of the serving cell is greater than or equal to the fifth threshold. On the contrary, the terminal device does not perform second measurement on the serving cell when the cell quality of the serving cell is less than the fifth threshold. For example, the terminal device measures the serving cell by using the main circuit. If the cell quality of the serving cell is greater than or equal to the fifth threshold, the terminal device starts to perform serving cell measurement by using the wake-up circuit; or if the cell quality of the serving cell is less than the fifth threshold, the terminal device does not perform serving cell measurement by using the wake-up circuit. Further, optionally, when the cell quality of the serving cell is greater than or equal to the fifth threshold, the terminal device performs second measurement and first measurement on the serving cell, or the terminal device performs only second measurement on the serving cell.

Further, optionally, that the terminal device performs second measurement on the serving cell when the cell quality of the serving cell is greater than or equal to the fifth threshold includes: When the cell quality of the serving cell is greater than or equal to the fifth threshold in a fifth time period, the terminal device starts to perform second measurement on the serving cell after the fifth time period. In other words, when the cell quality of the serving cell that is measured by the terminal device by using the main circuit is greater than or equal to the fifth threshold in the fifth time period, the terminal device starts to measure the serving cell by using the wake-up circuit after the fifth time period. In this manner, cell quality in a period of time may be compared with the fifth threshold. Compared with a manner of performing comparison based only on cell quality at a moment, this manner can reduce impact caused by a random error. It may be understood that, in embodiments of this application, the terminal device is not limited to measuring the serving cell at all times in the fifth time period. For example, the terminal device may perform measurement based on a measurement periodicity in the fifth time period. For example, assuming that the terminal device measures the serving cell once every 1s, and duration of the fifth time period is 10s, the terminal device may perform measurement 10 times in the fifth time period.

In an example, that the cell quality of the serving cell is greater than or equal to the fifth threshold in the fifth time period may be that the cell quality of the serving cell is greater than or equal to the fifth threshold throughout the fifth time period. For example, assuming that the terminal device measures the serving cell once every 1s, and duration of the fifth time period is 10s, that the cell quality of the serving cell is less than or equal to the fifth threshold in the fifth time period may be equivalently described as that measurement results of the serving cell for 10 consecutive times are all less than or equal to the fifth threshold.

In another example, that the cell quality of the serving cell is greater than or equal to the fifth threshold in the fifth time period may be that a quantity of times that the cell quality of the serving cell is less than or equal to the fifth threshold exceeds a fifth preset quantity of times in the fifth time period. For example, assuming that the terminal device measures the serving cell once every 1s, duration of the fifth time period is 10s, and the fifth preset quantity of times is 8, that the cell quality of the serving cell is less than or equal to the fifth threshold in the fifth time period may be equivalently described as that measurement results of the serving cell for 8 consecutive times are all less than or equal to the fifth threshold. The fifth preset quantity of times is greater than 1, and the fifth preset quantity of times may be predefined, preconfigured, pre-agreed on, or configured by a network device. This is not limited.

Optionally, that the terminal device monitors the wake-up signal based on the cell quality of the serving cell and the sixth threshold includes: The terminal device monitors the wake-up signal when the cell quality of the serving cell is greater than or equal to the sixth threshold. On the contrary, the terminal device does not monitor the wake-up signal when the cell quality of the serving cell is less than the sixth threshold. For example, the terminal device measures the serving cell by using the wake-up circuit. If the cell quality of the serving cell is greater than or equal to the sixth threshold, the terminal device starts to monitor the wake-up signal; or if the cell quality of the serving cell is less than the sixth threshold, the terminal device does not monitor the wake-up signal. Further, optionally, when the cell quality of the serving cell is greater than or equal to the sixth threshold, the terminal device performs second measurement on the serving cell, that is, performs serving cell measurement by using only the wake-up circuit, and does not perform serving cell measurement by using the main circuit.

Further, optionally, that the terminal device monitors the wake-up signal when the cell quality of the serving cell is greater than or equal to the sixth threshold includes: When the cell quality of the serving cell is greater than or equal to the sixth threshold in a sixth time period, the terminal device starts to monitor the wake-up signal after the sixth time period. In other words, when the cell quality of the serving cell that is measured by the terminal device by using the wake-up circuit is greater than or equal to the sixth threshold in the sixth time period, the terminal device starts to monitor the wake-up signal after the sixth time period. In this manner, cell quality in a period of time may be compared with the sixth threshold. Compared with a manner of performing comparison based only on cell quality at a moment, this manner can reduce impact caused by a random error.

In an example, that the cell quality of the serving cell is greater than or equal to the sixth threshold in the sixth time period may be that the cell quality of the serving cell is greater than or equal to the sixth threshold throughout the sixth time period.

In another example, that the cell quality of the serving cell is greater than or equal to the sixth threshold in the sixth time period may be that a quantity of times that the cell quality of the serving cell is less than or equal to the sixth threshold exceeds a sixth preset quantity of times in the sixth time period. The sixth preset quantity of times is greater than 1, and the sixth preset quantity of times may be predefined, preconfigured, pre-agreed on, or configured by the network device. This is not limited.

It may be understood that, in embodiments of this application, the terminal device is not limited to measuring the serving cell at all times in the sixth time period. For details, refer to the foregoing descriptions of the fifth time period.

Time lengths of the fifth time period and the sixth time period may be the same or different. This is not limited.

Optionally, the terminal device may determine the fifth time period and the sixth time period in any one of the following manners.

In a first possible implementation, the network device sends indication information #5 to the terminal device, where the indication information #5 indicates the fifth time period and/or the sixth time period.

In a second possible implementation, the fifth time period and the sixth time period are predefined, preconfigured, or pre-agreed on.

In a third possible implementation, a time period is associated with a threshold. In this way, the time period associated with the threshold may be determined by using the threshold.

For the foregoing three manners, refer to the descriptions of the first time period and the second time period in the method 800. Details are not described herein again.

Values of the fifth threshold and the sixth threshold may be different.

Optionally, the terminal device may determine the fifth threshold and the sixth threshold in any one of the following manners.

In a first possible implementation, the network device sends indication information #4 to the terminal device, where the indication information #4 indicates the fifth threshold and/or the sixth threshold.

In a second possible implementation, the fifth threshold and the sixth threshold are predefined, preconfigured, or pre-agreed on.

In a third possible implementation, a time period is associated with a threshold. In this way, the threshold associated with the time period may be determined by using the time period.

For the foregoing three manners, refer to the descriptions of the first threshold and the second threshold in the method 800. Details are not described herein again.

For example, FIG. 15 is a diagram of cell measurement applicable to another embodiment of this application.

As shown in FIG. 15, in embodiments of this application, a scenario in which the terminal device moves from a cell edge to a cell center is considered. As shown in FIG. 15, when the terminal device does not cross a boundary corresponding to the fifth threshold (that is, the cell quality of the serving cell is less than the fifth threshold), the terminal device monitors the paging message by using the main circuit, and performs serving cell measurement by using the main circuit (that is, the terminal device performs first measurement on the serving cell). When the terminal device crosses the boundary corresponding to the fifth threshold (that is, the cell quality of the serving cell is greater than or equal to the fifth threshold), the terminal device starts to perform serving cell measurement by using the wake-up circuit. In other words, in the time period, the terminal device performs serving cell measurement by using the main circuit, and performs serving cell measurement by using the wake-up circuit. When the terminal device crosses a boundary corresponding to the sixth threshold (that is, the cell quality of the serving cell that is measured by the terminal device by using the wake-up circuit is greater than or equal to the fifth threshold), the terminal device starts to monitor the wake-up signal, and in the time period, the terminal device performs serving cell measurement by using the wake-up circuit, and stops performing serving cell measurement by using the main circuit.

Optionally, in embodiments of this application, that the terminal device performs first measurement on the serving cell includes: The terminal device receives a fifth reference signal, and determines the cell quality of the serving cell based on the fifth reference signal. Specifically, the terminal device determines a value of a measurement amount based on the fifth reference signal, where the measurement amount may represent the cell quality of the serving cell. For example, the measurement amount includes at least one of the following: RSRP (for example, SS-RSRP), RSRQ (for example, SS-RSRQ), and an SINR.

For example, the fifth reference signal is an SSB. Based on this, the measurement amount may be obtained by measuring the SSB. For example, the terminal device may perform measurement based on a PSS and/or an SSS and/or a PBCH DMRS in the SSB.

For example, the terminal device receives the fifth reference signal by using the main circuit.

Optionally, in embodiments of this application, that the terminal device performs second measurement on the serving cell includes: The terminal device receives a sixth reference signal, and determines the cell quality of the serving cell based on the sixth reference signal. Specifically, the terminal device receives the sixth reference signal, and determines the cell quality of the serving cell based on the sixth reference signal. Specifically, the terminal device determines a value of a measurement amount based on the sixth reference signal, where the measurement amount may represent the cell quality of the serving cell. For example, the measurement amount includes at least one of the following: RSRP (or may be referred to as LP-RSRP), RSRQ (or may be referred to as LP-RSRQ), and an SINR (or may be referred to as an LP-SINR).

For example, the sixth reference signal is an LP-SS. Based on this, the measurement amount may be obtained by measuring the LP-SS.

For example, a modulation scheme of the sixth reference signal is OOK or FSK. That the modulation scheme of the sixth reference signal is OOK may alternatively be described as follows: In a time interval corresponding to the sixth reference signal, there is energy at some time domain locations, and there is no energy at some time domain locations.

For example, the terminal device receives the sixth reference signal by using the wake-up circuit.

It may be understood that, in embodiments of this application, "monitoring" may alternatively be replaced with "detecting" or "reading". For example, "monitoring a wake-up signal" may alternatively be replaced with "detecting a wake-up signal" or "reading a wake-up signal".

It may be further understood that, in some of the foregoing embodiments, "transmission" is mentioned. Unless otherwise specified, transmission includes receiving and/or sending. For example, transmitting a signal may include receiving a signal and/or sending a signal.

It may be further understood that, in embodiments of this application, if the terminal device learns that the terminal device is woken up, for example, learns, based on the wake-up signal, that the terminal device is woken up, the terminal device may immediately access the network device, or the terminal device may access the network device after a period of time. This is not limited.

It may be further understood that, in some of the foregoing embodiments, the main circuit and the wake-up circuit are mainly used as examples for descriptions. This application is not limited thereto. For example, the "wake-up circuit" may alternatively be replaced with a "first module", a "wake-up link", "in a first state", or "in a first mode". For example, "the terminal device receives a signal by using the wake-up circuit" may alternatively be replaced with "the terminal device receives a signal by using the first module or the terminal device receives a signal on the wake-up link". The "main circuit" may alternatively be replaced with a "second module", a "main link", "in a second state", or "in a second mode". For example, "the terminal device receives a signal by using the main circuit" may alternatively be replaced with "the terminal device receives a signal by using the second module or the terminal device receives a signal on the main link".

It may be further understood that, in embodiments of this application, interaction between the terminal device and the network device is mainly used as an example for description. This application is not limited thereto. The terminal device may be replaced with a receive end device, and the receive end device may be a terminal device or a network device. The network device may be replaced with a transmit end device, and the transmit end device may be a terminal device or a network device. For example, the "terminal device" may be replaced with a "first terminal device", and the "network device" may be replaced with a "second terminal device".

It may be further understood that, in some of the foregoing embodiments, sending information is mentioned for a plurality of times. For example, A sends information to B. That A sends information to B may include that A directly sends the information to B, or may include that A sends the information to B through another device or network element. This is not limited.

It may be further understood that, in some of the foregoing embodiments, "pre-agreed on" and "predefined" are mentioned for a plurality of times, and a person skilled in the art should understand meanings thereof. "Predefined" indicates "predefined in a protocol". "Pre-agreed on" indicates "pre-agreed on or pre-negotiated between devices". For example, a threshold (for example, the first threshold, the second threshold, the third threshold, the fourth threshold, the fifth threshold, or the sixth threshold) is pre-agreed on, which indicates that a value or a value range of the threshold is pre-agreed on between the terminal device and another device (for example, the network device).

It may be further understood that, in some of the foregoing embodiments, cell measurement (for example, neighbor cell measurement or serving cell measurement) is mentioned for a plurality of times. It may be understood that the cell measurement is performing cell measurement, for example, measuring a cell based on a cell measurement periodicity, but being not limited to measuring the cell at all times.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that, in the foregoing method embodiments, the method and the operation implemented by the terminal device may be implemented by a component (for example, a chip or a circuit) of the terminal device. In addition, the method and the operation implemented by the network device may also be implemented by a component (for example, a chip or a circuit) of the network device. This is not limited.

The foregoing describes in detail the methods provided in embodiments of this application with reference to FIG. 8 to FIG. 15. The following describes in detail apparatuses provided in embodiments of this application with reference to FIG. 16 to FIG. 18. It should be understood that descriptions of apparatus embodiments correspond to the descriptions of the method embodiments. Therefore, for content that is not described in detail, refer to the foregoing method embodiments. For brevity, details are not described herein again.

For example, FIG. 16 is a diagram of a communication apparatus 1600 according to an embodiment of this application. The apparatus 1600 includes a processing unit 1620. The processing unit 1620 may be configured to perform processing, for example, measure a cell. Optionally, the apparatus 1600 further includes a transceiver unit 1610. The transceiver unit 1610 may be configured to implement a corresponding communication function. The transceiver unit 1610 may alternatively be referred to as a communication interface or a communication unit.

Optionally, the apparatus 1600 may further include a storage unit. The storage unit may be configured to store instructions and/or data, and the processing unit 1620 may read the instructions and/or the data in the storage unit, so that the apparatus implements the foregoing method embodiments.

In a first possible design, the apparatus 1600 may be the terminal device (for example, the terminal device in FIG. 8) in the foregoing embodiments, and the apparatus 1600 may implement corresponding steps or procedures performed by the terminal device in the foregoing method embodiments. The transceiver unit 1610 may be configured to perform a receiving and sending-related operation (for example, an operation of sending and/or receiving data or a message) of the terminal device in the foregoing method embodiments. The processing unit 1620 may be configured to perform a processing-related operation of the terminal device in the foregoing method embodiments, or an operation other than receiving and sending (for example, an operation other than sending and/or receiving data or a message).

In a possible implementation, the processing unit 1620 is configured to measure a serving cell; and the processing unit 1620 is further configured to: when a neighbor cell is not being measured, start to measure the neighbor cell based on cell quality of the serving cell and a first threshold; or when the neighbor cell is being measured, stop measuring the neighbor cell based on the cell quality of the serving cell and a second threshold, where the first threshold and the second threshold are different.

In a second possible design, the apparatus 1600 may be the network device (for example, the network device in FIG. 8) in the foregoing embodiments, and the apparatus 1600 may implement corresponding steps or procedures performed by the network device in the foregoing method embodiments. The transceiver unit 1610 may be configured to perform a receiving and sending-related operation (for example, an operation of sending and/or receiving data or a message) of the network device in the foregoing method embodiments. The processing unit 1620 may be configured to perform a processing-related operation of the network device in the foregoing method embodiments, or an operation other than receiving and sending (for example, an operation other than sending and/or receiving data or a message).

In a possible implementation, the transceiver unit 1610 is configured to send second configuration information, where the second configuration information indicates a first threshold and/or a second threshold, the first threshold is used to start to measure a neighbor cell with reference to cell quality of a serving cell when the neighbor cell is not being measured, and the second threshold is used to stop measuring the neighbor cell with reference to the cell quality of the serving cell when the neighbor cell is being measured, where the first threshold and the second threshold are different.

In a third possible design, the apparatus 1600 may be the terminal device (for example, the terminal device in FIG. 11) in the foregoing embodiments, and the apparatus 1600 may implement corresponding steps or procedures performed by the terminal device in the foregoing method embodiments. The transceiver unit 1610 may be configured to perform a receiving and sending-related operation (for example, an operation of sending and/or receiving data or a message) of the terminal device in the foregoing method embodiments. The processing unit 1620 may be configured to perform a processing-related operation of the terminal device in the foregoing method embodiments, or an operation other than receiving and sending (for example, an operation other than sending and/or receiving data or a message).

In a possible implementation, the processing unit 1620 is configured to measure a serving cell; and the processing unit 1620 is further configured to: when a wake-up signal is monitored, monitor a paging message based on cell quality of the serving cell and a third threshold; or when the paging message is monitored, monitor the wake-up signal based on the cell quality of the serving cell and a fourth threshold, where the wake-up signal is used to wake up at least one terminal device, and the third threshold and the fourth threshold are different.

In a fourth possible design, the apparatus 1600 may be the network device (for example, the network device in FIG. 11) in the foregoing embodiments, and the apparatus 1600 may implement corresponding steps or procedures performed by the network device in the foregoing method embodiments. The transceiver unit 1610 may be configured to perform a receiving and sending-related operation (for example, an operation of sending and/or receiving data or a message) of the network device in the foregoing method embodiments. The processing unit 1620 may be configured to perform a processing-related operation of the network device in the foregoing method embodiments, or an operation other than receiving and sending (for example, an operation other than sending and/or receiving data or a message).

In a possible implementation, the transceiver unit 1610 is configured to send fourth configuration information, where the fourth configuration information indicates a third threshold and/or a fourth threshold, the third threshold is used to monitor a paging message with reference to cell quality of a serving cell when a wake-up signal is monitored, and the fourth threshold is used to monitor the wake-up signal with reference to the cell quality of the serving cell when the paging message is monitored, where the wake-up signal is used to wake up at least one terminal device, and the third threshold and the fourth threshold are different.

In a fifth possible design, the apparatus 1600 may be the terminal device (for example, the terminal device in FIG. 14) in the foregoing embodiments, and the apparatus 1600 may implement corresponding steps or procedures performed by the terminal device in the foregoing method embodiments. The transceiver unit 1610 may be configured to perform a receiving and sending-related operation (for example, an operation of sending and/or receiving data or a message) of the terminal device in the foregoing method embodiments. The processing unit 1620 may be configured to perform a processing-related operation of the terminal device in the foregoing method embodiments, or an operation other than receiving and sending (for example, an operation other than sending and/or receiving data or a message).

In a possible implementation, the processing unit 1620 is configured to: when first measurement is performed on a serving cell, perform second measurement on the serving cell based on cell quality of the serving cell and a fifth threshold; or when second measurement is performed on the serving cell, monitor a wake-up signal based on the cell quality of the serving cell and a sixth threshold, where the wake-up signal is used to wake up at least one terminal device, and the fifth threshold and the sixth threshold are different.

In a sixth possible design, the apparatus 1600 may be the network device (for example, the network device in FIG. 14) in the foregoing embodiments, and the apparatus 1600 may implement corresponding steps or procedures performed by the network device in the foregoing method embodiments. The transceiver unit 1610 may be configured to perform a receiving and sending-related operation (for example, an operation of sending and/or receiving data or a message) of the network device in the foregoing method embodiments. The processing unit 1620 may be configured to perform a processing-related operation of the network device in the foregoing method embodiments, or an operation other than receiving and sending (for example, an operation other than sending and/or receiving data or a message).

In a possible implementation, the transceiver unit 1610 is configured to send sixth configuration information, where the sixth configuration information indicates a fifth threshold and/or a sixth threshold, the fifth threshold is used to perform second measurement on a serving cell with reference to cell quality of the serving cell when first measurement is performed on the serving cell, and the sixth threshold is used to monitor a wake-up signal with reference to the cell quality of the serving cell when second measurement is performed on the serving cell, where the wake-up signal is used to wake up at least one terminal device, and the fifth threshold and the sixth threshold are different.

It should be understood that a specific process in which the units perform the foregoing corresponding steps is described in detail in the foregoing method embodiments. For brevity, details are not described herein again.

It should be further understood that the apparatus 1600 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1600 may be specifically the communication apparatus in the foregoing embodiments, and may be configured to perform procedures and/or steps corresponding to the communication apparatus in the foregoing method embodiments. To avoid repetition, details are not described herein again.

The apparatus 1600 in the foregoing solutions has functions of implementing corresponding steps performed by the communication apparatus (for example, the terminal device or the network device) in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving-sending operations and a related processing operation in the method embodiments.

In addition, the transceiver unit 1610 may alternatively be a transceiver circuit (for example, may include a receiving circuit and a sending circuit), and the processing unit may be a processing circuit.

It should be noted that the apparatus in FIG. 16 may be the communication device (for example, the terminal device or the network device) in the foregoing embodiments, or may be a chip or a chip system, for example, a system on chip (system on chip, SoC). The transceiver unit may be an input/output circuit or a communications interface. The processing unit is a processor, a microprocessor, or an integrated circuit integrated on the chip. This is not limited herein.

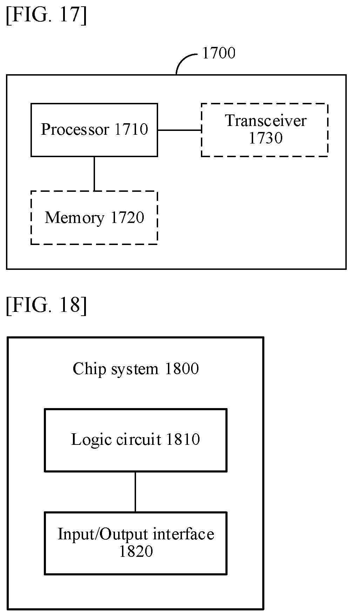

For example, FIG. 17 is a diagram of another communication apparatus 1700 according to an embodiment of this application. The apparatus 1700 includes a processor 1710. The processor 1710 is coupled to a memory 1720. The memory 1720 is configured to store a computer program or instructions and/or data. The processor 1710 is configured to: execute the computer program or the instructions stored in the memory 1720, or read the data stored in the memory 1720, to perform the methods in the foregoing method embodiments.

Optionally, there are one or more processors 1710.

Optionally, there are one or more memories 1720.

Optionally, the memory 1720 and the processor 1710 may be integrated together or separately disposed.

Optionally, as shown in FIG. 17, the apparatus 1700 further includes a transceiver 1730. The transceiver 1730 is configured to receive and/or send a signal. For example, the processor 1710 is configured to control the transceiver 1730 to receive and/or send the signal.

For example, the processor 1710 may have a function of the processing unit 1620 shown in FIG. 16, the memory 1720 may have a function of the storage unit, and the transceiver 1730 may have a function of the transceiver unit 1610 shown in FIG. 16.

In a solution, the apparatus 1700 is configured to implement operations performed by the communication apparatus (for example, the terminal device or the network device) in the foregoing method embodiments.

For example, the processor 1710 is configured to execute the computer program or the instructions stored in the memory 1720, to implement related operations of the communication apparatus in the foregoing method embodiments.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not of limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described in this specification is intended to include, but is not limited to, these and any other appropriate type of memory.

For example, FIG. 18 is a diagram of a chip system 1800 according to an embodiment of this application. The chip system 1800 (or may be referred to as a processing system) includes a logic circuit 1810 and an input/output interface (input/output interface) 1820.

The logic circuit 1810 may be a processing circuit in the chip system 1800. The logic circuit 1810 may be coupled and connected to a storage unit, and invoke instructions in the storage unit, so that the chip system 1800 can implement the methods and functions in embodiments of this application. The input/output interface 1820 may be an input/output circuit in the chip system 1800, and outputs information processed by the chip system 1800, or inputs to-be-processed data or signaling information to the chip system 1800 for processing.

In a solution, the chip system 1800 is configured to implement operations performed by the communication apparatus (for example, the terminal device or the network device) in the foregoing method embodiments.

For example, the logic circuit 1810 is configured to implement a processing-related operation performed by the communication apparatus (for example, the terminal device or the network device) in the foregoing method embodiments, and the input/output interface 1820 is configured to implement a sending and/or receiving-related operation performed by the communication apparatus (for example, the terminal device or the network device) in the foregoing method embodiments.

An embodiment of this application further provides a computer-readable storage medium. The computer-readable storage medium stores computer instructions used to implement the method performed by the communication apparatus (for example, the terminal device or the network device) in the foregoing method embodiments.

For example, when the computer program is executed by a computer, the computer is enabled to implement the method performed by the communication apparatus (for example, the terminal device or the network device) in the foregoing method embodiments.

An embodiment of this application further provides a computer program product, including instructions. When the instructions are executed by a computer, the method performed by the communication apparatus (for example, the terminal device or the network device) in the foregoing method embodiments is implemented.

An embodiment of this application further provides a communication system. The communication system includes the terminal device and/or the network device in the foregoing embodiments. For example, the system includes the terminal device and the network device in the embodiment in FIG. 8. For another example, the system includes the terminal device and the network device in the embodiment in FIG. 11. For another example, the system includes the terminal device and the network device in the embodiment in FIG. 14.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A cell measurement method, comprising:
measuring a serving cell; and
when a neighbor cell is not being measured, starting to measure the neighbor cell based on cell quality of the serving cell and a first threshold; or
when the neighbor cell is being measured, stopping measuring the neighbor cell based on the cell quality of the serving cell and a second threshold, wherein
the first threshold and the second threshold are different.

2. The method according to claim 1, wherein
the starting to measure the neighbor cell based on the cell quality of the serving cell and the first threshold comprises:
starting to measure the neighbor cell when the cell quality of the serving cell is less than or equal to the first threshold; and/or
the stopping measuring the neighbor cell based on the cell quality of the serving cell and the second threshold comprises:
stopping measuring the neighbor cell when the cell quality of the serving cell is greater than or equal to the second threshold.

3. The method according to claim 2, wherein the starting to measure the neighbor cell when the cell quality of the serving cell is less than or equal to the first threshold comprises:
when the cell quality of the serving cell is less than or equal to the first threshold in a first time period, starting to measure the neighbor cell after the first time period; and/or
the stopping measuring the neighbor cell when the cell quality of the serving cell is greater than or equal to the second threshold comprises:
when the cell quality of the serving cell is greater than or equal to the second threshold in a second time period, stopping measuring the neighbor cell after the second time period.

4. The method according to claim 3, wherein
the method further comprises: receiving first configuration information, wherein the first configuration information indicates the first time period and/or the second time period; or
the first time period and/or the second time period are/is predefined.

5. The method according to any one of claims 1 to 4, wherein the first threshold is less
than the second threshold.

6. The method according to any one of claims 1 to 5, wherein the method further comprises:
receiving second configuration information, wherein the second configuration information indicates the first threshold and/or the second threshold.

7. The method according to any one of claims 1 to 6, wherein the measuring the serving cell comprises:
receiving a first reference signal, and determining the cell quality of the serving cell based on the first reference signal.

8. The method according to claim 7, wherein the first reference signal is a low-power synchronization signal LP-SS.

9. The method according to any one of claims 1 to 8, wherein the measuring the neighbor cell comprises: receiving a second reference signal, and determining cell quality of the neighbor cell based on the second reference signal.

10. The method according to claim 9, wherein the second reference signal is a synchronization signal block SSB.

11. The method according to any one of claims 1 to 10, wherein the method further comprises:
when a wake-up signal is monitored, monitoring a paging message based on the cell quality of the serving cell and a third threshold; or
when the paging message is monitored, monitoring the wake-up signal based on the cell quality of the serving cell and a fourth threshold, wherein
the wake-up signal is used to wake up at least one terminal device, and the third threshold and the fourth threshold are different.

12. The method according to claim 11, wherein
the monitoring the paging message based on the cell quality of the serving cell and the third threshold comprises:
monitoring the paging message when the cell quality of the serving cell is less than or equal to the third threshold; and/or
the monitoring the wake-up signal based on the cell quality of the serving cell and the fourth threshold comprises:
monitoring the wake-up signal when the cell quality of the serving cell is greater than or equal to the fourth threshold.

13. The method according to claim 12, wherein
the monitoring the paging message when the cell quality of the serving cell is less than or equal to the third threshold comprises:
when the cell quality of the serving cell is less than or equal to the third threshold, monitoring the paging message, and stopping monitoring the wake-up signal; and/or
the monitoring the wake-up signal when the cell quality of the serving cell is greater than or equal to the fourth threshold comprises:
when the cell quality of the serving cell is greater than or equal to the fourth threshold, monitoring the wake-up signal, and stopping monitoring the paging message.

14. The method according to claim 12 or 13, wherein
the monitoring the paging message when the cell quality of the serving cell is less than or equal to the third threshold comprises:
when the cell quality of the serving cell is less than or equal to the third threshold in a third time period, monitoring the paging message after the third time period; and/or
the monitoring the wake-up signal when the cell quality of the serving cell is greater than or equal to the fourth threshold comprises:
when the cell quality of the serving cell is greater than or equal to the fourth threshold in a fourth time period, monitoring the wake-up signal after the fourth time period.

15. The method according to claim 14, wherein
the method further comprises: receiving third configuration information, wherein the third configuration information indicates the third time period and/or the fourth time period; or
the third time period and/or the fourth time period are/is predefined.

16. The method according to any one of claims 11 to 15, wherein the third threshold is less than the fourth threshold.

17. The method according to any one of claims 11 to 16, wherein the method further comprises:
receiving fourth configuration information, wherein the fourth configuration information indicates the third threshold and/or the fourth threshold.

18. The method according to any one of claims 12 to 17, wherein the method further comprises:
receiving a third reference signal; and
the monitoring the paging message when the cell quality of the serving cell is less than or equal to the third threshold comprises:
monitoring the paging message when the cell quality of the serving cell that is determined based on the third reference signal is less than or equal to the third threshold.

19. The method according to claim 18, wherein the third reference signal is an LP-SS.

20. The method according to any one of claims 12 to 19, wherein the method further comprises:
receiving a fourth reference signal; and
the monitoring the wake-up signal when the cell quality of the serving cell is greater than or equal to the fourth threshold comprises:
monitoring the wake-up signal when the cell quality of the serving cell that is determined based on the fourth reference signal is greater than or equal to the fourth threshold.

21. The method according to claim 20, wherein the fourth reference signal is an SSB.

22. A cell measurement method, comprising:
sending second configuration information, wherein the second configuration information indicates a first threshold and/or a second threshold, the first threshold is used to start to measure a neighbor cell with reference to cell quality of a serving cell when the neighbor cell is not being measured, and the second threshold is used to stop measuring the neighbor cell with reference to the cell quality of the serving cell when the neighbor cell is being measured, wherein
the first threshold and the second threshold are different.

23. The method according to claim 22, wherein the method further comprises:
sending first configuration information, wherein the first configuration information indicates a first time period and/or a second time period, the first threshold is used to start to measure the neighbor cell with reference to the cell quality of the serving cell in the first time period when the neighbor cell is not being measured, and the second threshold is used to stop measuring the neighbor cell with reference to the cell quality of the serving cell in the second time period when the neighbor cell is being measured.

24. The method according to claim 22 or 23, wherein the first threshold is less than the second threshold.

25. A cell measurement method, comprising:
measuring a serving cell; and
when a wake-up signal is monitored, monitoring a paging message based on cell quality of the serving cell and a third threshold; or
when the paging message is monitored, monitoring the wake-up signal based on the cell quality of the serving cell and a fourth threshold, wherein the wake-up signal is used to wake up at least one terminal device, and the third threshold and the fourth threshold are different.

26. The method according to claim 25, wherein
the monitoring the paging message based on the cell quality of the serving cell and the third threshold comprises: monitoring the paging message when the cell quality of the serving cell is less than or equal to the third threshold; and/or
the monitoring the wake-up signal based on the cell quality of the serving cell and the fourth threshold comprises: monitoring the wake-up signal when the cell quality of the serving cell is greater than or equal to the fourth threshold.

27. The method according to claim 26, wherein
the monitoring the paging message when the cell quality of the serving cell is less than or equal to the third threshold comprises: when the cell quality of the serving cell is less than or equal to the third threshold, monitoring the paging message, and stopping monitoring the wake-up signal; and/or
the monitoring the wake-up signal when the cell quality of the serving cell is greater than or equal to the fourth threshold comprises: when the cell quality of the serving cell is greater than or equal to the fourth threshold, monitoring the wake-up signal, and stopping monitoring the paging message.

28. The method according to claim 26 or 27, wherein
the monitoring the paging message when the cell quality of the serving cell is less than or equal to the third threshold comprises: when the cell quality of the serving cell is less than or equal to the third threshold in a third time period, monitoring the paging message after the third time period; and/or
the monitoring the wake-up signal when the cell quality of the serving cell is greater than or equal to the fourth threshold comprises: when the cell quality of the serving cell is greater than or equal to the fourth threshold in a fourth time period, monitoring the wake-up signal after the fourth time period.

29. The method according to claim 28, wherein the method further comprises:
receiving third configuration information, wherein the third configuration information indicates the third time period and/or the fourth time period; or the third time period and/or the fourth time period are/is predefined.

30. The method according to any one of claims 25 to 29, wherein
the third threshold is less than the fourth threshold.

31. The method according to any one of claims 25 to 30, wherein the method further comprises:
receiving fourth configuration information, wherein the fourth configuration information indicates the third threshold and/or the fourth threshold.

32. The method according to any one of claims 26 to 31, wherein the method further comprises:
receiving a third reference signal; and
the monitoring the paging message when the cell quality of the serving cell is less than or equal to the third threshold comprises: monitoring the paging message when the cell quality of the serving cell that is determined based on the third reference signal is less than or equal to the third threshold.

33. The method according to any one of claims 25 to 32, wherein
the third reference signal is a low-power synchronization signal LP-SS.

34. The method according to any one of claims 26 to 33, wherein the method further comprises:
receiving a fourth reference signal; and
the monitoring the wake-up signal when the cell quality of the serving cell is greater than or equal to the fourth threshold comprises: monitoring the wake-up signal when the cell quality of the serving cell that is determined based on the fourth reference signal is greater than or equal to the fourth threshold.

35. The method according to claim 34, wherein
the fourth reference signal is a synchronization signal block SSB.

36. A cell measurement method, comprising:
sending fourth configuration information, wherein the fourth configuration information indicates a third threshold and/or a fourth threshold, the third threshold is used to monitor a paging message with reference to cell quality of a serving cell when a wake-up signal is monitored, and the fourth threshold is used to monitor the wake-up signal with reference to the cell quality of the serving cell when the paging message is monitored, wherein the wake-up signal is used to wake up at least one terminal device, and the third threshold and the fourth threshold are different.

37. The method according to claim 36, wherein the method further comprises:
sending third configuration information, wherein the third configuration information indicates a third time period and/or a fourth time period, the third threshold is used to monitor the paging message with reference to the cell quality of the serving cell in the third time period when the wake-up signal is monitored, and the fourth threshold is used to monitor the wake-up signal with reference to the cell quality of the serving cell in the fourth time period when the paging message is monitored.

38. The method according to claim 36 or 37, wherein the third threshold is less than the fourth threshold.

39. A cell measurement method, comprising:
when first measurement is performed on a serving cell, performing second measurement on the serving cell based on cell quality of the serving cell and a fifth threshold; or
when second measurement is performed on the serving cell, monitoring a wake-up signal based on the cell quality of the serving cell and a sixth threshold, wherein the wake-up signal is used to wake up at least one terminal device, and the fifth threshold and the sixth threshold are different.

40. The method according to claim 39, wherein the performing second measurement on the serving cell based on the cell quality of the serving cell and the fifth threshold comprises:
performing second measurement on the serving cell when the cell quality of the serving cell is greater than or equal to the fifth threshold.

41. The method according to claim 40, wherein the performing second measurement on the serving cell when the cell quality of the serving cell is greater than or equal to the fifth threshold comprises:
when the cell quality of the serving cell is greater than or equal to the fifth threshold in a fifth time period, performing second measurement on the serving cell after the fifth time period.

42. The method according to any one of claims 39 to 41, wherein the monitoring the wake-up signal based on the cell quality of the serving cell and the sixth threshold comprises:
monitoring the wake-up signal when the cell quality of the serving cell is greater than or equal to the sixth threshold.

43. The method according to claim 42, wherein the monitoring the wake-up signal when the cell quality of the serving cell is greater than or equal to the sixth threshold comprises:
when the cell quality of the serving cell is greater than or equal to the sixth threshold in a sixth time period, monitoring the wake-up signal after the sixth time period.

44. The method according to claim 41 or 43, wherein the method further comprises:
receiving fifth configuration information, wherein the fifth configuration information indicates the fifth time period and/or the sixth time period; or
the fifth time period and/or the sixth time period are/is predefined.

45. The method according to any one of claims 39 to 44, wherein the method further comprises:
receiving sixth configuration information, wherein the sixth configuration information indicates the fifth threshold and/or the sixth threshold.

46. The method according to any one of claims 39 to 45, wherein the method further comprises:
receiving a fifth reference signal; and
performing first measurement on the serving cell comprises:
determining the cell quality of the serving cell based on the fifth reference signal.

47. The method according to claim 46, wherein the fifth reference signal is a synchronization signal block SSB.

48. The method according to any one of claims 39 to 47, wherein the method further comprises:
receiving a sixth reference signal; and
performing second measurement on the serving cell comprises:
determining the cell quality of the serving cell based on the sixth reference signal.

49. The method according to claim 48, wherein the sixth reference signal is a low-power synchronization signal LP-SS.

50. A cell measurement method, comprising:
sending sixth configuration information, wherein the sixth configuration information indicates a fifth threshold and/or a sixth threshold, the fifth threshold is used to perform second measurement on a serving cell with reference to cell quality of the serving cell when first measurement is performed on the serving cell, and the sixth threshold is used to monitor a wake-up signal with reference to the cell quality of the serving cell when second measurement is performed on the serving cell, wherein the wake-up signal is used to wake up at least one terminal device, and the fifth threshold and the sixth threshold are different.

51. The method according to claim 50, wherein the method further comprises:
sending fifth configuration information, wherein the fifth configuration information indicates a fifth time period and/or a sixth time period, the fifth threshold is used to perform second measurement on the serving cell with reference to the cell quality of the serving cell in the fifth time period when first measurement is performed on the serving cell, and the sixth threshold is used to monitor the wake-up signal with reference to the cell quality of the serving cell in the sixth time period when second measurement is performed on the serving cell.

52. A communication apparatus, comprising a module or a unit configured to perform the method according to any one of claims 1 to 51.

53. A communication apparatus, comprising a processor, wherein the processor is configured to enable the communication apparatus to perform the method according to any one of claims 1 to 51.

54. The apparatus according to claim 53, wherein the apparatus further comprises a memory and/or a communication interface, wherein
the communication interface is coupled to the processor, and the communication interface is configured to input and/or output information; and
the memory is configured to store a computer program or instructions used to perform the method according to any one of claims 1 to 51.

55. A computer-readable storage medium, wherein the computer-readable storage medium stores a computer program or instructions, and when the computer program or the instructions are run on a communication apparatus, the communication apparatus is enabled to perform the method according to any one of claims 1 to 51.

56. A computer program product, wherein the computer program product comprises a computer program or instructions used to perform the method according to any one of claims 1 to 51.
